# EUROPEAN PATENT APPLICATION

(11) **EP 2 289 623 A1**
(43) Date of publication of application: **02.03.2011**
(21) Application number: 09169070.1
(22) Date of filing: 31.08.2009
(51) Int. Cl.: B01J 31/22, C08C 19/02, C08C 19/08, C08L 9/02, C08L 15/00

(54) **Metathesis of nitrile rubbers in the presence of transition metal catalysts**

(71) Applicant: LANXESS Deutschland GmbH, 51369 Leverkusen (DE)
(72) Inventor: ONG, Christopher, Orange, TX 77632 (US); MÜLLER, Julia, 50670, Köln (DE); SODDEMANN, Matthias, 51503, Rösrath (DE); KOENIG, Thomas, 51375, Leverkusen (DE)

(57) **Abstract**

The present invention relates to a low molecular weight optionally hydrogenated nitrile rubber and a process for preparing a low molecular weight optionally hydrogenated nitrile rubber by molecular weight degradation of nitrile rubbers via a metathesis process in the presence of a transition metal complex catalyst in a specific reaction mixture, a polymer composite comprising at least one optionally hydrogenated nitrile rubber, at least one cross-linking agent and/or curing system, optionally at least one filler and optionally further auxiliary products for rubbers and a shaped article comprising the optionally hydrogenated nitrile rubber or the composite.

## Description

### FIELD OF THE INVENTION

The present invention relates to a low molecular weight optionally hydrogenated nitrile rubber and a process for preparing a low molecular weight optionally hydrogenated nitrile rubber by molecular weight degradation of nitrile rubbers via a metathesis process in the presence of a transition metal complex catalyst in a specific reaction mixture, a polymer composite comprising at least one optionally hydrogenated nitrile rubber, at least one cross-linking agent and/or curing system, optionally at least one filler and optionally further auxiliary products for rubbers and a shaped article comprising the optionally hydrogenated nitrile rubber or the composite.

### BACKGROUND OF THE INVENTION

Nitrile rubber, also referred to as "NBR" for short, is used as starting material for producing hydrogenated nitrile rubber, referred to as "HNBR" for short. Nitrile rubbers are copolymers of at least one unsaturated nitrile and at least one conjugated diene and possible further copolymerizable comonomers. HNBR is typically prepared by the selective hydrogenation of NBR. The degree of hydrogenation of the copolymerized diene units is usually in the range from 50 to 100%.

NBR and HNBR are specialty rubbers with an attractive property profile. Hydrogenated nitrile rubber in particular has very good heat resistance, excellent ozone and chemical resistance, and excellent oil resistance. Coupled with the high level of mechanical properties of the rubber (in particular the high resistance to abrasion) it is not surprising that HNBR as well as NBR have found widespread use in the automotive (seals, hoses, bearing pads), oil (stators, well head seals, valve plates), electrical (cable sheathing), mechanical engineering (wheels, rollers) and shipbuilding (pipe seals, couplings) industries, amongst others.

Commercially available HNBR grades usually have a Mooney viscosity (ML 1+4 at 100°C) in the range from 55 to 120, which corresponds to a number average molecular weight Mₙ (method of determination: gel permeation chromatography (GPC) against polystyrene equivalents) in the range from about 200 000 to 700 000. The polydispersity index PDI (PDI = M_{w}/Mₙ, where M_{w} is the weight average molecular weight and Mₙ is the number average molecular weight), which gives information about the width of the molecular weight distribution, measured here is frequently 3 or above. The residual double bond content is usually in the range from 1 to 18% (determined by IR spectroscopy).

The processability of NBR and HNBR is subject to severe restrictions as a result of the relatively high Mooney viscosity. For many applications, it would be desirable to have NBR or HNBR grades which have a lower molecular weight and thus a lower Mooney viscosity, especially liquid NBR or HNBR grades. This would decisively improve the processability.

In particular for HNBR numerous attempts have been made in the past to reduce the molecular weight of the polymer, i.e. to shorten the chain length of HNBR by degradation. For example, the molecular weight can be decreased by thermo mechanical treatment (mastication, i.e. mechanical breakdown), e.g. on a roll mill or in a screw apparatus (EP-A-0 419 952). However, this thermo mechanical degradation has the disadvantage that functional groups such as hydroxyl, keto, carboxyl and ester groups, are incorporated into the molecule as a result of partial oxidation and, in addition, the microstructure of the polymer is substantially altered. This results in disadvantageous changes in the properties of the polymer. In addition, these types of approaches, by their very nature, produce polymers having a broad molecular weight distribution.

A hydrogenated nitrile rubber having a low Mooney and improved processability, but which has the same microstructure as those rubbers which are currently available, is difficult to manufacture using current technologies. The hydrogenation of NBR to produce HNBR results in an increase in the Mooney viscosity of the raw polymer. This Mooney Increase Ratio (MIR) is generally around 2, depending upon the polymer grade, hydrogenation level and nature of the feedstock. Furthermore, limitations associated with the production of NBR itself dictate the low viscosity range for the HNBR feedstock.

In WO-A-02/100905**,** WO-A-02/100941**, and** WO-A-2003/002613 a low-Mooney HNBR is disclosed as well as a method for producing said low-Mooney HNBR. Such method comprises degradation of nitrile rubber starting polymers by olefin metathesis and subsequent hydrogenation. The starting nitrile rubber is reacted in a first step in the optional presence of a coolefin and a specific catalyst based on osmium, ruthenium, molybdenum or tungsten complexes and hydrogenated in a second step. The hydrogenated nitrile rubbers obtained typically have a weight average molecular weight (Mw) in the range from 30 000 to 250 000, a Mooney viscosity (ML 1+4 at 100°C) in the range from 3 to 50 and a polydispersity index PDI of less than 2.5 can be obtained by this route according to WO-A-02/100941**.**

In WO-A-03/002613 a nitrile rubber having a molecular weight (M_{w}) in the range of from 25,000 to 200,000 g/mol, a Mooney viscosity (ML 1+4@100 deg. C) of less than 25, and a MWD (or polydispersity index, PDI) of less than 2.5 is disclosed. The low molecular weight nitrile rubber having a narrow molecular weight distribution is prepared in the presence of at least one co-olefin and at least one known metathesis catalyst. According to the examples in WO-A-03/002613 bis(tricyclohexylphosphine)benzylidene ruthenium dichloride (Grubb's metathesis catalyst) is used and the molecular weight (M_{w}) of the NBR obtained after metathesis is in the range of from 54,000 to 180,000. The polydisdersity index is from 2.0 to 2.5.

In US 2004/0123811 A1 a process for the production of (hydrogenated) nitrile rubber polymers by metathesis of nitrile butadiene rubber in the absence of a co-olefin, optionally followed by hydrogenation of the resulting metathesized NBR is disclosed. The resulting, optionally hydrogenated, nitrile rubber has a molecular weight M_{w} in the range of from 20,000 to 250,000, a Mooney viscosity (ML 1+4@100 deg. C) in the range of from 1 to 50, and a MWD (or polydispersity index, PDI) of less than 2.6. According to the examples in US 2004/0132891 A1 a Grubbs 2^{nd} generation catalyst is used and the molecular weight M_{w} of the NBR obtained after metathesis is in the range of from 119,000 to 185,000, the Mooney viscosity (ML 1+4@100 deg. C) is 20 or 30 and the polydipersity index is 2.4 or 2.5.

In WO-A1-2005/080456 a process for the preparation of low molecular weight hydrogenated nitrile rubber is disclosed, wherein the substrate NBR is simultaneously subjected to a metathesis reaction and a hydrogenation reaction. This reactions take place in the presence of a known metathesis catalyst. The hydrogenated nitrile rubber produced has a molecular weight M_{w} in the range of from 20,000 to 250,000, a Mooney viscosity (ML 1+4@100 deg. C) in the range of from 1 to 50 and a MWD (or polydispersity index, PDI) of less than 2.6. According the the example in WO-A1-2005/080456 a Grubbs 2^{nd} generation catalyst is employed and the HNBR obtained has a molecular weight M_{w} of 178,000 and a PDI of 2.70.

None of the documents mentioned above discloses low molecular weight liquid nitrile rubbers and the preparation thereof. Especially, none of the documents discloses an effective process for the isolation of the low molecular weight rubbers. With the low molecular weight of the rubber, it is not advantages to use standard isolation techniques such as coagulation with alcohols (methanol, isopropanol, ethanol etc.) or steam/water due to the extreme tackiness of the rubber which would result in lost product and lengthy finishing times.

Metathesis catalysts are known, inter alia, from WO-A-96/04289 and WO-A-97/06185. They have the following in-principle structure: 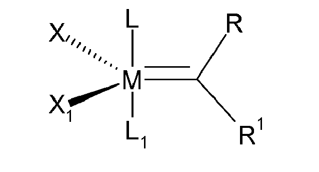 where M is osmium or ruthenium, R and R₁ are organic radicals having a wide range of structural variation, X and X₁ are anionic ligands and L and L₁ are uncharged electron donors. The customary term "anionic ligands" is used in the literature regarding such metathesis catalysts to describe ligands which are always negatively charged with a closed electron shell when regarded separately from the metal centre.

The metathesis reaction of the nitrile rubbers is typically carried out in a suitable solvent which does not deactivate the catalyst used and also does not adversely affect the reaction in any other way. Preferred solvents include but are not restricted to dichloromethane, benzene, toluene, methyl ethyl ketone, acetone, tetrahydrofuran, tetrahydropyran, dioxane and cyclohexane. One of the preferred solvents is chlorobenzene.

### SUMMARY OF THE INVENTION

The present invention relates to extremely low molecular weight optionally hydrogenated nitrile rubbers having a molecular weight M_{w} of 50,000 g/mol or less and an extremely low polydispersity index of less than 2.0. The present invention further relates to a process for preparing the optionally hydrogenated extremely low molecular weight nitrile rubber ((H)NBR) by subjecting a nitrile rubber to a molecular weight degradation via a metathesis reaction in the presence of at least one transition metal complex catalyst and optional hydrogenation of the nitrile rubber obtained, wherein the rubber is isolated from the solvent through a process where the rubber is contacted with a mechanical degassing device.

### DETAILED DESCRIPTION OF THE INVENTION

It has been determined that the metathesis reaction of a nitrile rubber in the presence of a metal catalyst complex in a solvent leads to a polymer with a molecular weight 50,000 g/mol or less, preferably 10,000 to 50,000 g/mol, more preferably 12,000 to 40,000 g/mol and a polydispersity (Mw/Mn) of less than 2.0, which can be isolated from the solvent through a process where the polymer is contacted with a mechanical degassing device.

The present invention therefore relates to a process for preparing an optionally hydrogenated nitrile rubber comprising subjecting a nitrile rubber to a molecular weight degradation via a metathesis reaction in the presence of a homogeneous catalyst and optionally a co-olefin, as well as in the presence of a solvent, wherein the metathesis is carried out in the presence of at least one transition metal complex catalyst, wherein the optionally hydrogenated nitrile rubber is isolated from the solvent through a process where the rubber is contacted with a mechanical degassing device. The present invention further relates to an optionally hydrogenated nitrile rubber having a molecular weight (M_{w}) of 50,000 g/mol or less and a polydispersity index (PDI) of less than 2.0.

For the purposes of the present patent application and invention, all the definitions of radicals, parameters or explanations given above or below in general terms or in preferred ranges can be combined with one another in any way, i.e. including combinations of the respective ranges and preferred ranges.

The term "substituted" used for the purposes of the present patent application in respect of the metathesis catalyst or the salt of the general formula (I) means that a hydrogen atom on an indicated radical or atom has been replaced by one of the groups indicated in each case, with the proviso that the valence of the atom indicated is not exceeded and the substitution leads to a stable compound.

### CATALYSTS:

In the process of the invention, the catalysts or catalyst precursors used are transition metal complex carbenes or transition metal complex compounds which form transition metal carbenes under the reaction conditions or transition metal salts in combination with an alkylating agent. These catalysts can be either ionic or nonionic.

Suitable catalysts which may be used in the process of the present invention are **compounds of the general formula (I)** 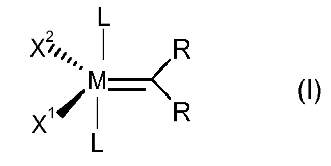 where
- M: is osmium or ruthenium,
- the radicals R: are identical or different and are each an alkyl, preferably C₁-C₃₀-alkyl, cycloalkyl, preferably C₃-C₂₀-cycloalkyl, alkenyl, preferably C₂-C₂₀-alkenyl, alkynyl, preferably C₂-C₂₀-alkynyl, aryl, preferably C₆-C₂₄-aryl, carboxylate, preferably C₁- C₂₀-carboxylate, alkoxy, preferably C₁-C₂₀-alkoxy, alkenyloxy, preferably C₂-C₂₀- alkenyloxy, alkynyloxy, preferably C₂-C₂₀-alkynyloxy, aryloxy, preferably C₆-C₂₄- aryloxy, alkoxycarbonyl, preferably C₂-C₂₀-alkoxycarbonyl, alkylamino, preferably C₁-C₃₀-alkylamino, alkylthio, preferably C₁-C₃₀-alkylthio, arylthio, preferably C₆- C₂₄-arylthio, alkylsulphonyl, preferably C₁-C₂₀-alkylsulphonyl, or alkylsulphinyl, preferably C₁-C₂₀-alkylsulphinyl radical, each of which may optionally be substituted by one or more alkyl, halogen, alkoxy, aryl or heteroaryl radicals,
- X¹ and X²: are identical or different and are two ligands, preferably anionic ligands, and
- L: represents identical or different ligands, preferably uncharged electron donors.

In the catalysts of the general formula (I), **X¹** and **X²** are identical or different and are two ligands, preferably anionic ligands.

A variety of representatives of the catalysts of the formula (I) are known in principle, e.g. from WO-A-96/04289 and WO-A-97/06185.

Particular preference is given to both ligands L in the general formula (I) being identical or different trialkylphosphine ligands in which at least one of the alkyl groups is a secondary alkyl group or a cycloalkyl group, preferably isopropyl, isobutyl, sec-butyl, neopentyl, cyclopentyl or cyclohexyl.

Particular preference is given to one ligand L in the general formula (I) being a trialkylphosphine ligand in which at least one of the alkyl groups is a secondary alkyl group or a cycloalkyl group, preferably isopropyl, isobutyl, sec-butyl, neopentyl, cyclopentyl or cyclohexyl.

Two catalysts which are preferred for the catalyst system of the invention and come under the general formula (I) have the structures (III) (Grubbs (I) catalyst) and (IV) (Grubbs (II) catalyst), where Cy is cyclohexyl.

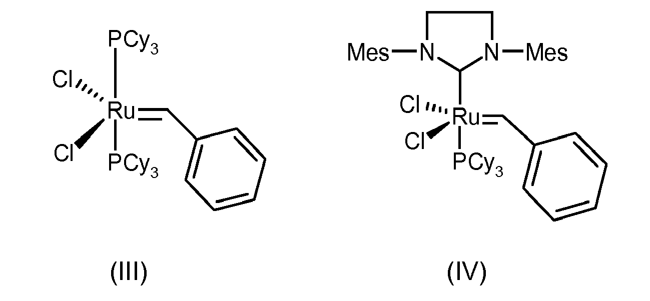

Further suitable metathesis catalysts which may be used in the process of the present invention are **catalysts of the general formula (V),** 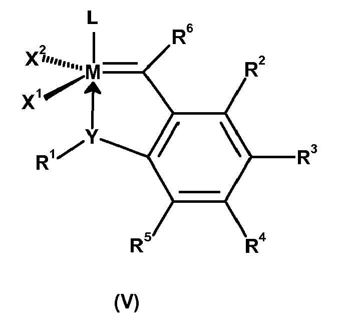 where
- M: is ruthenium or osmium,
- Y: is oxygen (O), sulphur (S), an N-R¹ radical or a P-R¹ radical, where R¹ is as defined below,
- X¹ and X²: are identical or different ligands,
- R¹: is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphynyl radical, each of which may optionally be substituted by one or more alkyl, halogen, alkoxy, aryl or heteroaryl radicals,
- R², R³, R⁴ and R⁵: are identical or different and are each hydrogen, organic or inorganic radicals,
- R⁶: is hydrogen or an alkyl, alkenyl, alkynyl or aryl radical and
- L: is a ligand which has the same meanings given for the formula (A).

The catalysts of the general formula (V) are known in principle. Representatives of this class of compounds are the catalysts described by Hoveyda et al. in US 2002/0107138 A1 and Angew Chem. Int. Ed. 2003, 42, 4592**,** and the catalysts described by Grela in WO-A-2004/035596**,** Eur. J. Org. Chem 2003, 963-966 and Angew. Chem. Int. Ed. 2002, 41, 4038 and in J. Org. Chem. 2004, 69, 6894-96 and Chem. Eur. J 2004, 10, 777-784**.** The catalysts are commercially available or can be prepared as described in the references cited.

Particularly suitable catalysts which may be used in the process of the present invention are **catalysts of the general formula (VI)** 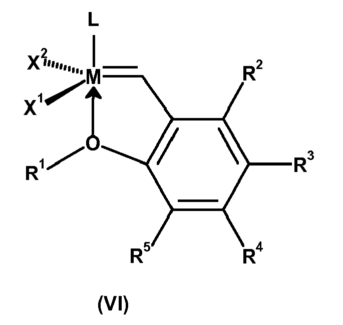 where
- M, L, X¹, X², R¹, R², R³, R⁴ and R⁵: can have the general, preferred and particularly preferred meanings given for the general formula (V).

These catalysts are known in principle, for example from US 2002/0107138 A1 (Hoveyda et al.**),** and can be obtained by preparative methods indicated there.

Particular preference is given to catalysts of the general formula (VI) in which
- M: is ruthenium,
- X¹ and X²: are both halogen, in particular, both chlorine,
- R¹: is a straight-chain or branched C₁-C₁₂-alkyl radical,
- R², R³, R⁴, R⁵: have the general and preferred meanings given for the general formula (V) and
- L: has the general and preferred meanings given for the general formula (V).

Very particular preference is given to catalysts of the general formula (VI) in which
- M: is ruthenium,
- X¹ and X²: are both chlorine,
- R¹: is an isopropyl radical,
- R², R³, R⁴, R⁵: are all hydrogen and
- L: is a substituted or unsubstituted imidazolidine radical of the formula (IIa) or (IIb), 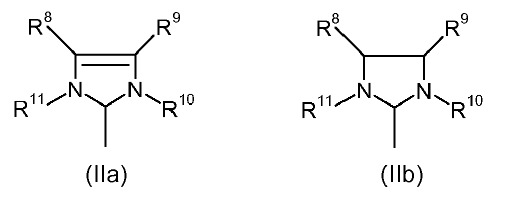
where
- R⁸, R⁹, R¹⁰, R¹¹: are identical or different and are each hydrogen, straight-chain or branched C₁-C₃₀- alkyl, C₃-C₂₀-cycloalkyl, C₂-C₂₀-alkenyl, C₂-C₂₀-alkynyl, C₆-C₂₄-aryl, C₁-C₂₀- carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₂₀-alkylsulphonyl, C₁-C₂₀-alkylsulphonate, C₆-C₂₄-arylsulphonate or C₁-C₂₀-alkylsulphinyl.

As catalyst coming under the general structural formula (VI) for the catalyst systems of the invention, especial preference is given to those of the formula (VII), where Mes is in each case a 2,4,6-trimethylphenyl radical.

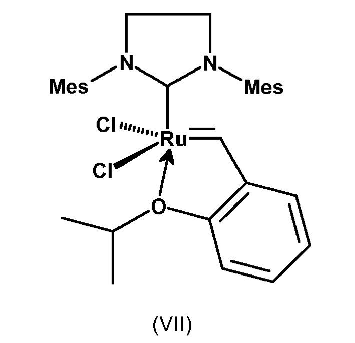

This catalyst is also referred to in the literature as "Hoveyda catalyst".

Further suitable catalysts which come under the general structural formula (VI) are those of the following formulae (VIII), (IX), (X), (XI), (XII), (XIII), (XIV) and (XV), where Mes is in each case a 2,4,6-trimethylphenyl radical.

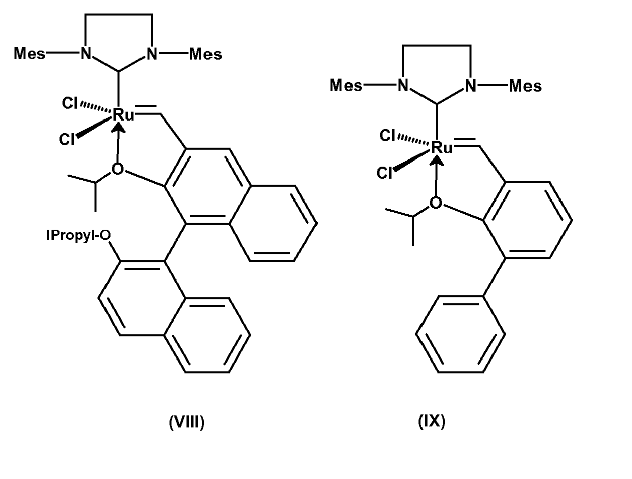

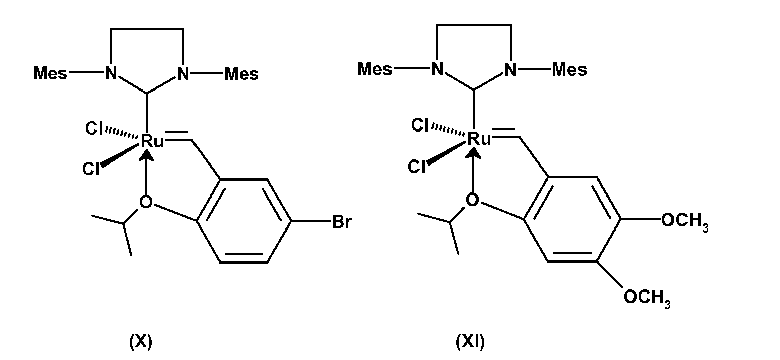

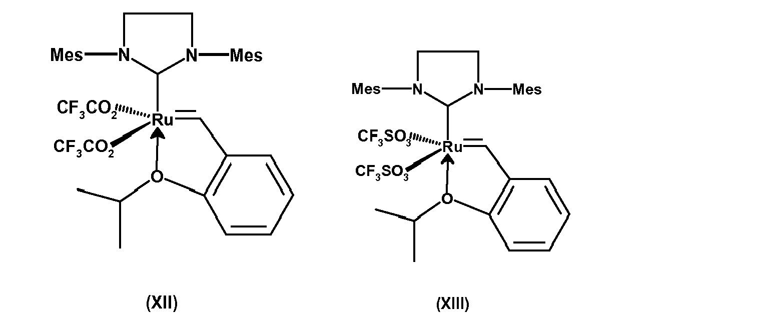

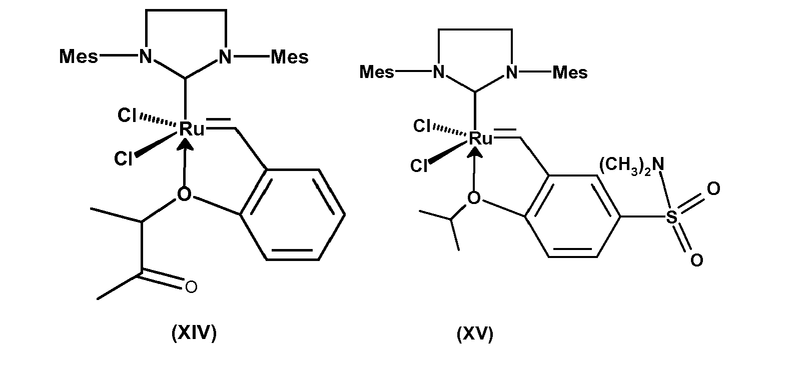

Further suitable catalysts which may be used in the process of the present invention are **catalysts of the general formula (XVI)** 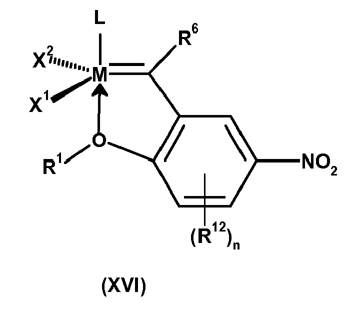 where
- M, L, X¹, X², R¹ and R⁶: have the general and preferred meanings given for the formula (V),
- R¹²: are identical or different and have the general and preferred meanings given for the radicals R², R³, R⁴ and R⁵ in the formula (V), with the exception of hydrogen, and
- N: is 0,1,2 or 3.

These catalysts are known in principle, for example from WO-A-2004/035596 (Grela**),** and can be obtained by the preparative methods indicated there.

Particular preference is given to catalysts of the general formula (XVI) in which
- M: is ruthenium,
- X¹ and X²: are both halogen, in particular both chlorine,
- R¹: is a straight-chain or branched C₁-C₁₂-alkyl radical,
- R¹²: has the meanings given for the general formula (V),
- n: is 0, 1, 2 or 3,
- R⁶: is hydrogen and
- L: has the meanings given for the general formula (V).

Very particular preference is given to catalysts of the general formula (XVI) in which
- M: is ruthenium,
- X¹ and X²: are both chlorine,
- R¹: is an isopropyl radical,
- n: is 0 and
- L: is a substituted or unsubstituted imidazolidine radical of the formula (IIa) or (IIb), 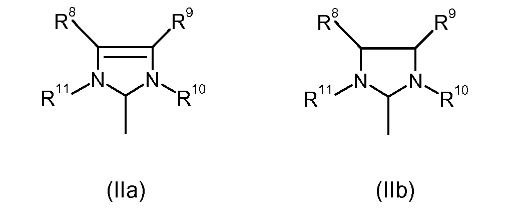
where
- R⁸, R⁹, R¹⁰, R¹¹: are identical or different and are each hydrogen, straight-chain or branched, cyclic or acyclic C₁-C₃₀-alkyl, C₂-C₂₀-alkenyl, C₂-C₂₀-alkynyl, C₆-C₂₄-aryl, C₁-C₂₀- carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₂₀-alkylsulphonyl, C₁-C₂₀-alkylsulphonate, C₆-C₂₄-arylsulphonate or C₁-C₂₀-alkylsulphinyl.

A particularly suitable catalyst which comes under the general formula (XVI) has the structure (XVII) 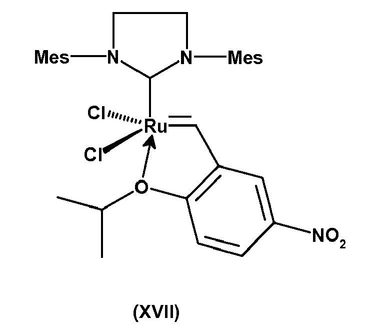 and is also referred to in the literature as "Grela catalyst".

A further suitable catalyst which comes under the general formula (XVI) has the structure (XVIII), where Mes is in each case a 2,4,6-trimethylphenyl radical.

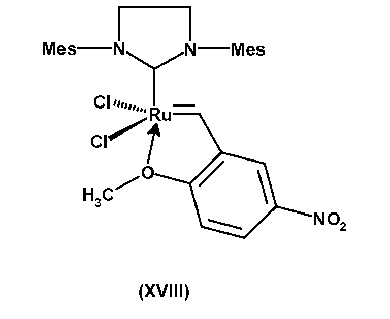

In an alternative embodiment, it is possible to use dendritic **catalysts of the general formula (XIX),** 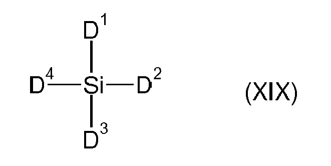 where D¹, D², D³ and D⁴ each have a structure of the general formula (XX) below which is bound via the methylene group to the silicon of the formula (XIX), 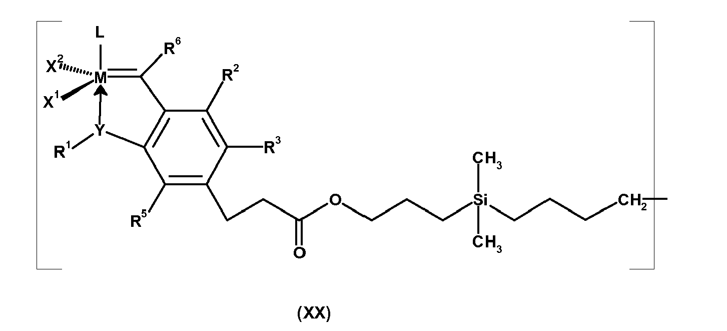 where
- M, L, X¹, X², R¹, R², R³, R⁵ and R⁶: have the meanings given for the general formula (V) and can also have the abovementioned preferred meanings.

Such catalysts of the general formula (XX) are known from US 2002/0107138 A1 and can be prepared according to the information given there.

Further suitable catalysts which may be used in the process of the present invention are **catalysts of the general formula (XXI - XXIII)** 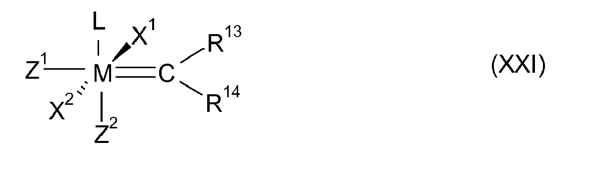 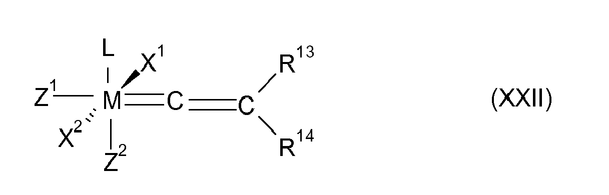 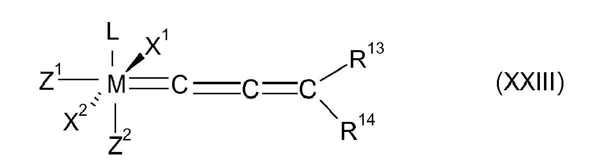 where
- M: is ruthenium or osmium,
- X¹ and X²: are identical or different ligands, preferably anionic ligands,
- Z¹ and Z²: are identical or different and neutral electron donor ligands,
- R¹³ and R¹⁴: are each independently hydrogen or a substituent selected from the group consisting of alkyl, cycloalkyl, alkenyl, alkynyl, aryl, carboxylate, alkoxy, alkenyloxy, alkynyloxy, aryloxy, alkoxycarbonyl, alkylamino, alkylthio, arylthio, alkylsulphonyl and alkylsulphinyl radical, each of which may optionally be substituted by one or more alkyl, halogen, alkoxy, aryl or heteroaryl radicals, and
- L: is a ligand.

The catalysts of the general formula (XXI)-(XXIII) are known in principle. Representatives of this class of compounds are the catalysts described by Grubbs et al. in WO 2003/011455 A1**,** Grubbs et al. WO 2003/087167 A2, Organometallics 2001, 20, 5314 and Angew. Chem. Int. Ed. 2002, 41, 4038**.** The catalysts are commercially available or can be prepared as described in the references cited.

### Z¹ and Z²

In the process of the present invention the catalysts of general formulae (XXI), (XXII) and (XXIII) are used in which **Z¹ and Z²** are identical or different ligands being neutral electron donor ligands. Such ligands are in general weakly coordinating. Typically they represent optionally substituted heterocyclic groups. They may represent five- or six-membered monocyclic groups containing 1 to 4, preferably 1 to 3, most preferably 1 or 2 heteroatoms, or bicyclic or polycyclic structures composed of 2, 3, 4 or 5 such five- or six-membered monocyclic groups wherein all aforementioned groups are optionally substituted by one or more alkyl, preferably C₁₋C₁₀-alkyl, cycloalkyl, preferably C₃-C₈-cycloalkyl, alkoxy, preferably C₁-C₁₀-alkoxy, halogen, preferably chlorine or bromine, aryl, preferably C₆-C₂₄-aryl, or heteroaryl, preferably C₅-C₂₃-heteroaryl radicals where these abovementioned substituents may in turn be substituted by one or more radicals, preferably selected from the group consisting of halogen, in particular chlorine or bromine, C₁-C₅-alkyl, C₁-C₅-alkoxy and phenyl.

Examples of Z¹ and Z² include, without limitation: nitrogen containing heterocycles such as pyridine, pyridazine, bipyridine, pyrimidine, pyrazine, pyrazolidine, pyrrolidine, piperazine, indazole, quinoline, purine, acridine, bisimidazole, picolylimine, imidazolidine and pyrrole.

Z¹ and Z² together may also represent a bidentate ligand, thereby forming a cyclic structure. Particular preference is given to a process according to the invention using catalysts of the general formula (XXI) in which
- M: is ruthenium,
- X¹ and X²: are both halogen, in particular, both chlorine,
- Z¹ and Z²: are identical or different and represent five- or six-membered monocyclic groups containing 1 to 4, preferably 1 to 3, most preferably 1 or 2 heteroatoms, or bicyclic or polycyclic structures composed of 2, 3, 4 or 5 such five- or six-membered monocyclic groups wherein all aforementioned groups are optionally substituted by one or more alkyl, preferably C₁-C₁₀-alkyl, cycloalkyl, preferably C₃-C₈-cycloalkyl, alkoxy, preferably C₁-C₁₀-alkoxy, halogen, preferably chlorine or bromine, aryl, preferably C₆-C₂₄-aryl, or heteroaryl, preferably C₅-C₂₃ heteroaryl radicals, or Z¹ and Z² together represent a bidentate ligand, thereby forming a cyclic structure,
- R¹³ and R¹⁴: are identical or different and are each C₁-C₃₀-alkyl C₃-C₂₀-cycloalkyl, C₂-C₂₀- alkenyl, C₂-C₂₀-alkynyl, C₆-C₂₄-aryl, C₁-C₂₀-carboxylate, C₁-C₂₀-alkoxy, C₂-C₂₀- alkenyloxy, C₂-C₂₀-alkynyloxy, C₆-C₂₄-aryloxy, C₂-C₂₀-alkoxycarbonyl, C₁-C₃₀- alkylamino, C₁-C₃₀-alkylthio, C₆-C₂₄-arylthio, C₁-C₂₀-alkylsulphonyl, C₁-C₂₀- alkylsulphinyl, each of which may optionally be substituted by one or more alkyl, halogen, alkoxy, aryl or heteroaryl radicals, and
- L: is a substituted or unsubstituted imidazolidine radical of the formula (IIa) or (IIb), 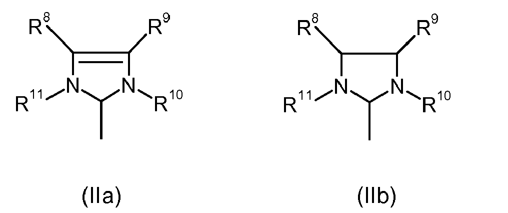
where
R⁸, R⁹, R¹⁰, R¹¹ are identical or different and are each hydrogen, straight-chain or branched, cyclic or acyclic C₁-C₃₀-alkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₂₀-alkylsulphonyl, C₁-C₂₀-alkylsulphonate, C₆-C₂₄-arylsulphonate or C₁-C₂₀-alkylsulphinyl.

A particularly preferred catalyst which comes under the general structural formula (XXI) is that of the formula (XXIV) 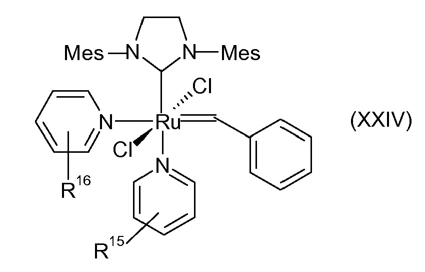 where
- R¹⁵, R¹⁶: are identical or different and represent halogen, straight-chain or branched C₁-C₂₀ alkyl, C₁-C₂₀ heteroalkyl, C₁-C₁₀ haloalkyl, C₁-C₁₀ alkoxy, C₆-C₂₄ aryl, preferably phenyl, formyl, nitro, nitrogen heterocycles, preferably pyridine, piperidine and pyrazine, carboxy, alkylcarbonyl, halocarbonyl, carbamoyl, thiocarbomoyl, carbamido, thioformyl, amino, trialkylsilyl und trialkoxysilyl.

The aforementioned alkyl, heteroalkyl, haloalkyl, alkoxy, phenyl, nitrogen heterocycles, alkylcarbonyl, halocarbonyl, carbamoyl, thiocarbamoyl and amino radicals may optionally also in turn be substituted by one or more substituents selected from the group consisting of halogen, preferably fluorine, chlorine, or bromine, C₁-C₅-alkyl, C₁-C₅-alkoxy and phenyl.

In a particularly preferred embodiment the catalyst (XXIV) has the general structural formula (XXIVa) or (XXIVb), wherein R¹⁵ and R¹⁶ have the same meaning as given for structural formula (XXIV)

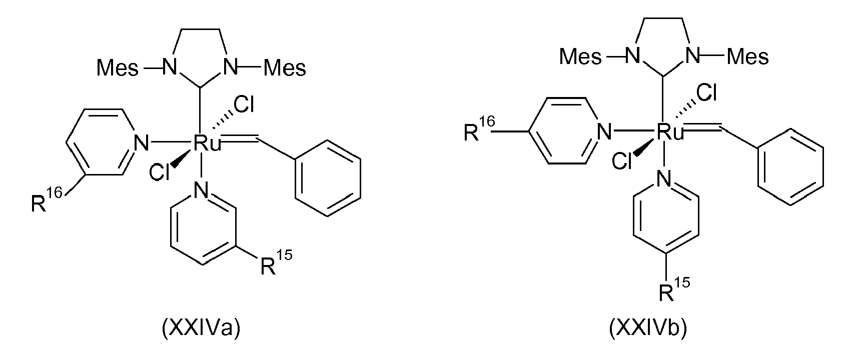

In the case where R¹⁵ and R¹⁶ are each hydrogen, catalyst (XXIV) is referred to as "Grubbs III catalyst" in the literature.

A metathesis catalyst which may be used in the process of the present invention can also be prepared using **catalysts of the general formula (XXV),** 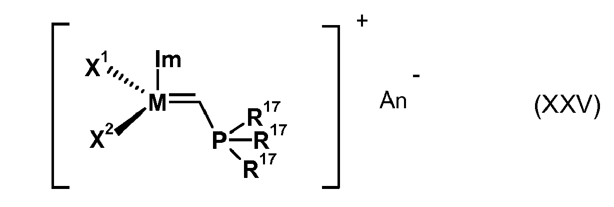 where
- M: is ruthenium or osmium,
- X¹ and X²: can be identical or different and are anionic ligands,
- the radicals R¹⁷: are identical or different and are organic radicals,
- Im: is a substituted or unsubstituted imidazolidine radical and
- An: is an anion.

These catalysts are known in principle (cf., for example, Angew. Chem. Int. Ed. 2004,43, 6161-6165**).**

Further suitable catalysts which may be used in the process of the present invention are **catalysts of the general formula (XXVI),** 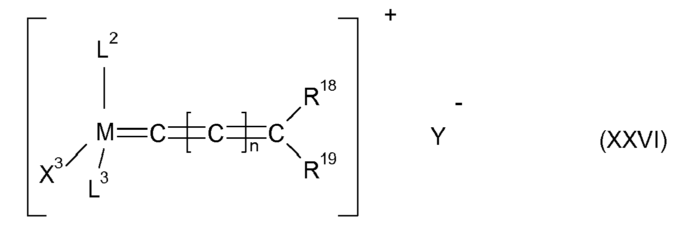 where
- M: is ruthenium or osmium,
- R¹⁸ and R¹⁹: are each, independently of one another, hydrogen, C₁-C₂₀-alkyl, C₂-C₂₀-alkenyl, C₂- C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₁- C₂₀-alkylsulphonyl or C₁-C₂₀-alkylsulphinyl,
- X³: is an anionic ligand,
- L²: is an uncharged π-bonded ligand, regardless of whether it is monocyclic or polycyclic,
- L³: is a ligand from the group of phosphines, sulphonated phosphines, fluorinated phosphines, functionalized phosphines having up to three aminoalkyl, ammonioalkyl, alkoxyalkyl, alkoxycarbonylalkyl, hydrocarbonylalkyl, hydroxyalkyl or ketoalkyl groups, phosphites, phosphinites, phosphonites, phosphine amines, arsines, stibines, ethers, amines, amides, imines, sulphoxides, thioethers and pyridines,
- Y⁻: is a noncoordinating anion and
- n: is 0, 1, 2, 3, 4 or 5.

Further suitable catalysts for which may be used in the process of the present invention are **catalysts of the general formula (XXVII)** 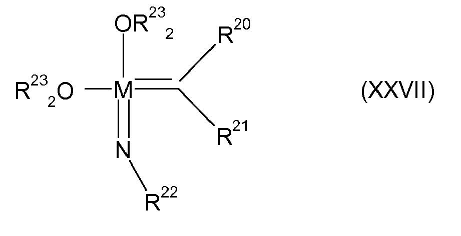 where
- M²: is molybdenum or tungsten,
- R²⁰ and R²¹: are identical or different and are each hydrogen, C₁-C₂₀-alkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₁- C₂₀-alkylsulphonyl or C₁-C₂₀-alkylsulphinyl, and
- R²² and R²³: are identical or different and are each a substituted or halogen-substituted C₁-C₂₀- alkyl, C₆-C₂₄-aryl, C₆-C₃₀-aralkyl radical or a silicone-containing analogue thereof.

Further suitable catalysts which may be used in the process of the present invention are **catalysts of the general formula (XXVIII),** 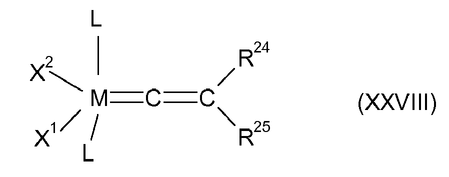 where
- M: is ruthenium or osmium,
- X¹ and X²: are identical or different and are anionic ligands which can assume all the meanings of X¹ and X² in the general formulae (I) and (V),
- L: are identical or different ligands which can assume all the general and preferred meanings of L in the general formulae (I) and (V), and
- R²⁴ and R²⁵: are identical or different and are each hydrogen or substituted or unsubstituted alkyl.

All the abovementioned catalysts of formula (I) can either be used as such in the reaction mixture of the NBR metathesis or can be applied to and immobilized on a solid support. As solid phases or supports, it is possible to use materials which firstly are inert towards the reaction mixture of the metathesis and secondly do not impair the activity of the catalyst. It is possible to use, for example, metals, glass, polymers, ceramic, organic polymer spheres or inorganic sol-gels for immobilizing the catalyst.

### Nitrile rubbers

The process according to the invention uses nitrile rubbers as starting rubber for the metathesis reaction. As nitrile rubbers ("NBR"), it is possible to use copolymers or terpolymers which comprise repeating units of at least one conjugated diene, at least one α,β-unsaturated nitrile and, if desired, one or more further copolymerizable monomers in the metathesis reaction.

The conjugated diene can be of any nature. Preference is given to using (C₄-C₆) conjugated dienes. Particular preference is given to 1,3-butadiene, isoprene, 2,3-dimethylbutadiene, piperylene or mixtures thereof. Very particular preference is given to 1,3-butadiene and isoprene or mixtures thereof. Especial preference is given to 1,3-butadiene.

As α,β-unsaturated nitrile, it is possible to use any known α,β-unsaturated nitrile, preferably a (C₃-C₅) α,β-unsaturated nitrile such as acrylonitrile, methacrylonitrile, ethacrylonitrile or mixtures thereof. Particular preference is given to acrylonitrile.

A particularly preferred nitrile rubber is thus a copolymer of acrylonitrile and 1,3-butadiene.

Apart from the conjugated diene and the α,β-unsaturated nitrile, it is possible to use one or more further copolymerizable monomers known to those skilled in the art, e.g. α,β-unsaturated monocarboxylic or dicarboxylic acids, their esters or amides. As α,β-unsaturated monocarboxylic or dicarboxylic acids, preference is given to fumaric acid, maleic acid, acrylic acid and methacrylic acid. As esters of α,β-unsaturated carboxylic acids, preference is given to using their alkyl esters and alkoxyalkyl esters. Particularly preferred alkyl esters of α,β-unsaturated carboxylic acids are methyl acrylate, ethyl acrylate, butyl acrylate, butyl methacrylate, 2-ethylhexyl acrylate, 2-ethylhexyl methacrylate and octyl acrylate. Particularly preferred alkoxyalkyl esters of α,β-unsaturated carboxylic acids are methoxyethyl (meth)acrylate, ethoxyethyl (meth)acrylate and methoxyethyl (meth)acrylate. It is also possible to use mixtures of alkyl esters, e.g. those mentioned above, with alkoxyalkyl esters, e.g. in the form of those mentioned above.

The proportions of conjugated diene and α,β-unsaturated nitrile in the NBR polymers to be used can vary within wide ranges. The proportion of or of the sum of the conjugated dienes is usually in the range from 40 to 90% by weight, preferably in the range from 60 to 85% by weight, based on the total polymer. The proportion of or of the sum of the α,β-unsaturated nitriles is usually from 10 to 60% by weight, preferably from 15 to 40% by weight, based on the total polymer. The proportions of the monomers in each case add up to 100% by weight. The additional monomers can be present in amounts of from 0 to 40% by weight, preferably from 0.1 to 40% by weight, particularly preferably from 1 to 30% by weight, based on the total polymer. In this case, corresponding proportions of the conjugated diene or dienes and/or of the α,β-unsaturated nitrile or nitriles are replaced by the proportions of the additional monomers, with the proportions of all monomers in each case adding up to 100% by weight.

The preparation of nitrile rubbers by polymerization of the abovementioned monomers is adequately known to those skilled in the art and is comprehensively described in the polymer literature. In addition nitrile rubbers which can be used for the purposes of the invention are also commercially available, e.g. as products from the product range of the trade names Perbunan® and Krynac® from Lanxess Deutschland GmbH.

The nitrile rubbers suited for the metathesis have a Mooney viscosity (ML 1+4 at 100°C) in the range from 25 to 120, preferably from 30 to 70. This corresponds to a number average molecular weight Mₙ in the range 200 000 - 700 000, preferably in the range 200 000 - 400 000. The nitrile rubbers used also have a polydispersity PDI = M_{w}/Mₙ, where M_{w} is the weight average molecular weight and Mₙ is the number average molecular weight, in the range 2.0 - 6.0 and preferably in the range 2.0 - 4.0.

The determination of the Mooney viscosity is carried out in accordance with ASTM standard D 1646. The determination of the number average molecular weight and the weight average molecular weight M_{w} is carried out by GPC in accordance with DIN 55672-1.

The nitrile rubbers obtained by the metathesis process according to the present invention have a weight average molecular weight M_{w} of 50,000 g/mol or less, preferably in the range 10,000 to 50,000 g/mol, more preferably in the range 12,000 to 40,000 g/mol. The nitrile rubbers obtained also have a polydispersity PDI = M_{w}/Mₙ, where Mₙ is the number average molecular weight of less than 2.0, preferably > 1.0 to less than 2.0, more preferably 1.1 to 1.9.

### Co-olefin:

The metathesis reaction according to the present invention may be carried out in the presence of a co-olefin, which is preferably a C₂ to C₁₆ linear or branched olefin such as ethylene, isobutene, styrene or 1-hexene. Where the co-olefin is a liquid (such as 1-hexene), the amount of co-olefin employed is preferably in the range of from 1 to 200 weight %. Where the co-olefin is a gas (such as ethylene) the amount of co-olefin employed is such that it results in a pressure in the reaction vessel in the range of from 1 * 10⁵ Pa to 1 * 10⁷ Pa, preferably in the range of from 5.2 * 10⁵ Pa to 4*10⁶ Pa.. Preferably the metathesis reaction is performed using 1-hexene.

### Solvent:

The process of the present invention is carried out in a suitable solvent. The suitable solvent is a solvent which does not deactivate the catalyst used and also does not adversely affect the reaction in any other way. Preferred suitable solvents are organic solvents, in particular, halogenated hydrocarbons such as dichloromethane, trichloromethane, tetrachloromethane, 1,2-dichloroethane or trichloroethane, aromatic compounds such as benzene, toluene, xylene, cumene or halogeno-benzenes, preferably monochlorobenzene (MCB), ethers such as diethyl ether, tetrahydrofuran and dimethoxyethane, acetone, dimethyl carbonate or alcohols. In certain cases if a co-olefin is used which can itself act as a solvent (for example, 1-hexene) no other solvent is necessary.

The concentration of the nitrile rubber in the reaction mixture is not critical but, obviously, should be such that the reaction is not hampered if the mixture is too viscous to be stirred efficiently, for example. Preferably, the concentration of NBR is in the range of from 1 to 20% by weight, most preferably in the range of from 6 to 15% by weight of the total mixture.

The metathesis reaction is carried out at a temperature in the range of from 15 to 140°C; preferably in the range of from 20 to 80°C.

The amount of metathesis catalyst based on the nitrile rubber used depends on the nature and the catalytic activity of the specific catalyst. The weight amount of catalyst used is usually from 1 to 1000 ppm of noble metal, preferably from 2 to 500 ppm, in particular from 5 to 250 ppm, based on the nitrile rubber used. In a preferred embodiment of the present invention the weight amount of catalyst (calatyst loading) is in the range of from 0.01 to 0.30 phr, more preferably 0.02 to 0.25 phr. If a Grubbs (I) catalyst of structure (III), Grubbs (II) catalyst of structure (IV), an Hoveyda catalyst of structure (VII), a Grela catalyst of structure (XVII), a dendritic catalyst of structure (XIX), a Grubbs (III) catalyst of structure (XXIV) or a catalyst of any of the structures (XXIV), (XXV), (XXVI), (XXVII) or (XXVIII) is employed, the catalyst loading is for example even more preferably in the range of from 0.06 to 0.10 phr (parts per hundred of rubber).

The metathetic degradation process according to the invention can be followed by a hydrogenation of the degraded nitrile rubbers obtained. This can be carried out in the manner known to those skilled in the art.

It is possible to carry out the hydrogenation with use of homogeneous or heterogeneous hydrogenation catalysts. It is also possible to carry out the hydrogenation in situ, i.e. in the same reaction vessel in which the metathetic degradation has previously also been carried out and without the necessity of isolating the degraded nitrile rubber. The hydrogenation catalyst is simply added to the reaction vessel.

The catalysts used are usually based on rhodium, ruthenium or titanium, but it is also possible to use platinum, iridium, palladium, rhenium, osmium, cobalt or copper either as metal or preferably in the form of metal compounds (cf., for example, US-A-3,700,637**,** DE-A-25 39 132**,** EP-A-0 134 0 2 3 **,** D E-A-35 41 689**,** DE-A-35 40 918**,** EP-A-0 298 386**,** DE-A-35 29 252**,** DE-A-34 33 392**,** US-A-4,464,515 **and** US-A-4,503,196**).**

Suitable catalysts and solvents for a hydrogenation in the homogeneous phase are described below and are also known from DE-A-25 39 132 and EP-A-0 471 250**.**

The selective hydrogenation can be achieved, for example, in the presence of a rhodium- or ruthenium-containing catalyst. It is possible to use, for example, a catalyst of the general formula

(R¹ₘB)₁ M Xₙ,

where M is ruthenium or rhodium, the radicals R¹ are identical or different and are each a C₁-C₈-alkyl group, a C₄-C₈-cycloalkyl group, a C₆-C₁₅-aryl group or a C₇-C₁₅-aralkyl group. B is phosphorus, arsenic, sulphur or a sulphoxide group S=O, X is hydrogen or an anion, preferably halogen and particularly preferably chlorine or bromine, 1 is 2, 3 or 4, m is 2 or 3 and n is 1, 2 or 3, preferably 1 or 3. Preferred catalysts are tris(triphenylphosphine)rhodium(I) chloride, tris(triphenylphosphine)rhodium(III) chloride and tris(dimethyl sulphoxide)rhodium(III) chloride and also tetrakis(triphenylphosphine)rhodium hydride of the formula (C₆H₅)₃P)₄RhH and the corresponding compounds in which the triphenylphosphine has been completely or partly replaced by tricyclohexylphosphine. The catalyst can be utilized in small amounts. An amount in the range 0.01-1% by weight, preferably in the range 0.03-0.5% by weight and particularly preferably in the range 0.1-0.3% by weight, based on the weight of the polymer, is suitable.

It is usually appropriate to use the catalyst together with a cocatalyst which is a ligand of the formula R¹ₘB, where R¹, m and B have the meanings given above for the catalyst. Preferably, m is 3, B is phosphorus and the radicals R¹ can be identical or different. Preference is given to cocatalysts having trialkyl, tricycloalkyl, triaryl, triaralkyl, diaryl-monoalkyl, diaryl-monocycloalkyl, dialkyl-monoaryl, dialkyl-monocycloalkyl, dicycloalkyl-monoaryl or dicycloalkyl-monoaryl radicals.

Examples of cocatalysts may be found in, for example, US-A-4,631,315**.** A preferred cocatalyst is triphenylphosphine. The cocatalyst is preferably used in amounts in the range 0.3-5% by weight, preferably in the range 0.5-4% by weight, based on the weight of the nitrile rubber to be hydrogenated. Furthermore, the weight ratio of the rhodium-containing catalyst to the cocatalyst is preferably in the range from 1:3 to 1:55, more preferably in the range from 1:5 to 1:45. Based on 100 parts by weight of the nitrile rubber to be hydrogenated, it is appropriate to use from 0.1 to 33 parts by weight of the cocatalyst, preferably from 0.5 to 20 parts by weight and very particularly preferably from 1 to 5 parts by weight, in particular more than 2 but less than 5 parts by weight, of cocatalyst per 100 parts by weight of the nitrile rubber to be hydrogenated.

The practical implementation of this hydrogenation is adequately known to those skilled in the art from US-A-6,683,136**.** It is usually carried out by treating the nitrile rubber to be hydrogenated in a solvent such as toluene or monochlorobenzene with hydrogen at a temperature in the range from 100 to 150°C and a pressure in the range from 50 to 150 bar for from 2 to 10 hours.

For the purposes of the present invention, hydrogenation is a reaction of the double bonds present in the starting nitrile rubber to an extent of at least 50%, preferably 70-100%, particularly preferably 80-100%.

When heterogeneous catalysts are used, these are usually supported catalysts based on palladium which are, for example, supported on carbon, silica, calcium carbonate or barium sulphate.

After conclusion of the hydrogenation, a hydrogenated nitrile rubber having a weight average molecular weight of 50,000 g/mol or less, preferably in the range 10,000 to 50,000 g/mol, more preferably in the range 12,000 to 40,000 g/mol. The hydrogenated nitrile rubbers obtained also have a polydispersity PDI = M_{w}/Mₙ, where M_{w} is the weight average molecular weight and Mₙ is the number average molecular weight, of less than 2.0, preferably > 1.0 to less than 2.0, more preferably 1.1 to 1.9.

In the process of the present invention, the optionally hydrogenated rubber is isolated from the solvent solution, wherein the rubber is contacted with a mechanical degassing device. With the low molecular weight of the isolated rubber, it is not advantages to use standard isolation techniques such as coagulation with alcohols (methanol, isopropanol, ethanol etc.) or steam/water due to the extreme tackiness of the polymer which would result in lost product and lengthy finishing times. Therefore, a process through which the low molecular weight optionally hydrogenated nitrile polymer could be isolated from the organic solvent in high yield has been developed.

### Polymer Isolation:

It is necessary to remove the residual solvent from the polymer for a variety of reasons: The solvents are harmful to health and the environment and at high concentrations, degrade the polymer's performance. It is therefore desirable to have a low residual solvent level of below 2000 ppm, preferred below 1000 ppm and especially preferred below 500 ppm.

The technology of isolating rubbers from solvents and of reaching low residuals for rubbers is well known to those skilled in the art. It usually comprises coagulating the rubber using steam or a nonsolvent, stripping the solvent from the rubber in the form of an aqueous suspension with steam in stirred vessel and removing the water from the stripping process with a combination of dewatering presses and dryers.

However, it proved impossible to use this technology for the large scale commercial production of the low molecular weight rubbers according to this invention. It was surprisingly found that the rubber could be isolated from solution and brought to the low desired residuals levels by a "dry" process, which does not involve water.

Therefore, the present invention provides a process, wherein the optionally hydrogenated nitrile rubber is isolated from the organic solvent solution through a process where the rubber is contacted with a mechanical degassing device, wherein the mechanical degassing device is preferably a single-, twin- or multi-screw extruder, more preferably a twin screw extruder and most preferably a co-rotating, self wiping twin screw extruder.

Preferably, the polymer solution is prior to entering the mechanical degassing device subjected to concentration through subjecting the polymer solution to distillation.

In a further preferred embodiment of the present process the polymer solution is prior to entering the mechanical degassing device subjected to concentration by passing the polymer solution through a heat exchanger with a wall temperature between 150°C to 220°C, preferably 170°C to 200°C to reach a temperature from 110°C to 180°C, preferably 130°C to 160°C.

In a further preferred embodiment of the present process the polymer solution is prior to entering the mechanical degassing device subjected to concentration by heating the solution in an evaporation pipe where the wall temperature of the evaporation pipe is also kept between 150°C to 220°C, preferably 170°C to 200°C.

In a further preferred embodiment of the present process the polymer exiting the mechanical degassing device is passed through a sieve with preferred mesh width of between 10 and 100 micrometers, preferably between 20 and 50 micrometers.

Preferably, the polymer exiting the sieve is subjected to a polymer cooling, to cool the polymer down to 160°C to 100°C, with a wall temperature between 150°C and 90°C, wherein polymer cooler is of a static-mixer type.

In a further embodiment the present invention therefore comprises a process for isolation of a low molecular weight (H)NBR having a molecular weight M_{w} of 50,000 g/mol or less and a polydispersity index of < 2.0 comprising the following steps:
(i) distillation of a (H)NBR solution obtained after metathesis of NBR and optional subsequent hydrogenation by solvent distillation to have a concentration of (H)NBR in the range of from 15 to 60 % by weight, preferably 20 to 50 % by weight, more preferably 25 to 40 % by weight of the total solution;
(ii) pre-concentration of the distilled (H)NBR solution obtained in step (i) to a concentration of 50 to 80 % by weight of the total solution; and optionally heating of the pre-concentrated polymer solution;
(iii) mechanically degassing the polymer solution obtained in step (ii);
(iv) pumping the mechanically degassed polymer solution obtained in step (iii) through a sieve, preferably having a mesh width of from 10 to 100 micrometer, preferably from 20 to 50 micrometer; and optionally cooling the polymer obtained after sieving with a polymer cooler; and
(v) discharging the polymer obtained in step (iv), preferably by discharging into trays or by forming the polymer into bales.

The isolated optionally hydrogenated nitrile rubber obtained after the isolation process according to the present invention, comprises a solvent residue, especially an organic solvent residue, of less than 2000 ppm, preferably less than 1000 ppm and even more preferably less than 500 ppm.

### (i) Distillation

The (H)NBR polymer solution coming from metathesis is concentrated through solvent distillation to have a concentration of (H)NBR in the range of from 15 to 60% by weight, more preferably in the range of from 20 to 50% by weight and most preferably in the range of from 25 to 40% by weight of the total mixture.

### (ii) Pre-concentration

The evaporation starting from the solvent distillation is advantageously carried out in several steps, one comprising a pre-concentration to 50% to 80% weight of the total mixture and the next step in achieving the desired residual solvent levels.

In one preferred method of carrying out the pre-concentration, the polymer solution after the distillation step is heated in an evaporation pipe. The inlet pressure of the pipe is low enough (between 0,5 and 6 bar abs., preferably between 1 and 4 bar) in that pipe so that the solution starts to evaporate partially at the walls, leading to a drop in temperature and increased temperature. The wall temperature of the evaporation pipe is also kept between 150°C to 220°C, preferably 170°C to 200°C.

The evaporation pipe discharges the product into a separation vessel, in which the vapours separate from the concentrated polymer solution. The pressure in that separation vessel is kept between 200 mbar abs. and 0,5 bar abs, preferably between 100 mbar abs. and 1 bar abs. There are two outlets to the separation vessel: one for the vapours and one for the concentrated polymer solution. The vapour outlet is connected to a condenser and a vacuum pump. At the outlet for the concentrated polymer solution, situated at the bottom of the separation vessel, a gear pump or an extruder is employed for removing the concentrated polymer solution, preferably a gear pump. The polymer concentration reaches 50% to 80% at the outlet with the temperature dropping to 80 to 150°C, preferably 100 to 130°C due to evaporation of the solvent.

In another preferred method of carrying out the pre-concentration, the polymer solution after the distillation step is treated in a "flash step". In this stage, the solution is pumped through a heat exchanger with a wall temperature between 150°C to 220°C, preferably 170°C to 200°C to reach a temperature from 110°C to 180°C, preferably 130°C to 160°C. The heat exchanger may be a shell-and-tube heat exchanger, a plate heat exchanger or a static mixer heat exchanger; a static mixer heat exchanger is preferred. The polymer solution is then flashed into an separation vessel by means of a flashing valve. The pressure before the flashing valve is controlled so that the polymer solution does not boil in the heat exchanger. The pressure in the separation vessel is kept between 200 mbar abs. and 0,5 bar abs, preferably between 100 mbar abs. and 1 bar abs. There are two outlets to the separation vessel: one for the vapours and one for the concentrated polymer solution. The vapour outlet is connected to a condenser and a vacuum pump. At the outlet for the concentrated polymer solution, situated at the bottom of the separation vessel, a gear pump or an extruder is employed for removing the concentrated polymer solution, preferably a gear pump.

The process of treating the polymer in a flash step is advantageously carried out several times in sequence. The preferred number of flash steps is two or three, most preferred is two.

After pre-concentration, the concentrated polymer solution is preferably heated in another heat exchanger, preferably a static-mixer design, with a wall temperature between 150°C and 220°C, preferably between 170°C and 200°C , to a temperature of between 110°C and 180°C, preferably between 130°C and 160°C.

### (iii) Mechanical degassing

The polymer solution is then discharged into a mechanical degassing device. One preferred option of the mechanical degassing device is an extruder. Single-screw, twin-screw or multi-screw extruders may be used for this purpose; preferred is a twin-screw extruder and especially preferred a co-rotating, self-wiping twin screw extruder. The extruder is equipped with a rear vent, where the polymer flashes into the extruder barrel and vapours separate from the polymer solution which then travel in the opposite direction from the conveying direction of the extruder. The pressure in the rear vent is between 5 and 150 mbar abs, preferably between 10 and 100 mbar abs.

The extruder is also equipped with several other vents, through which additional vapours may be separated from the polymer. These vents are operated at lower pressure, between 0,5 and 20 mbar abs, preferably between 1 and 10 mbar abs. In order to avoid gas leakage between these vents, liquid seals formed by the polymer are employed, which are caused by back-pumping sections of the extruder which cause a section to be fully-filled with polymer. The wall temperature of the extruder is between 150°C and 220°C, preferably between 170°C and 200°C with its turning speed between 200/min and 600/min, preferably between 200/min and 600/min. Residence time in the extruder is between 10 seconds and 300 seconds, preferably between 30 seconds and 180 seconds.

Another option of a mechanical degassing device is a large-volume continuous kneader. This kneader may be single-shaft or twin-shaft, a twin shaft kneader may be either co-rotating or counter-rotating. Such a kneader is differentiated from an extruder by having longer residence times, between 300 seconds and 7200 seconds, preferably between 600 seconds and 3600 seconds, by having only a single pressure zone, a much larger surface area than an extruder and a much greater capability of heat transfer due to it larger areas. Examples of such kneaders are the List CRP or the Buss-SMS Reasoll.

The pressure in the kneader is kept between 0.5 and 20 mbar abs, preferably between 1 and 10 mbar abs. The wall temperature of the kneader is between 130°C and 200°C, preferably between 150°C and 180°C. Turning speed is between 10 and 300/min, preferably between 50 and 200/min.

### (iv) Sieving

Following the mechanical degassing device, there is a gear pump for increasing pump and a sieve for removing impurities from the polymer. The sieve has a preferred mesh width of from 10 and 100 micrometer, preferred from 20 and 50 micrometers. After the sieve, there is a preferred option to cool the polymer with a polymer cooler. The polymer cooler cools the polymer down to 160°C to 100°C, with a wall temperature between 150°C and 90°C. Preferably, this cooler is of static-mixer type.

### (v) Discharging

After sieving or optionally after the cooler, the product is discharged, preferably by discharging the product into trays or forming the product into bales.

The method of heating of any of the heat exchangers can be electrical or through a condensing or liquid heating medium. As condensing heating medium, steam is preferred. As liquid heating medium, organic heat transfer liquids suitable to the temperature of the process are preferred. Such heat transfer liquids are generally well-known and commercially available, and can themselves be heated either electrically or though a condensing medium. Cooling can be done by a liquid medium, preferably pressurized water or an organic heat transfer liquid.

The present invention further relates to polymer composites comprising beside at least one optionally hydrogenated nitrile rubber according to the present invention other ingredients customary in the rubber field.

The present invention further relates to the use of the optionally hydrogenated nitrile rubber according to the present invention in polymer composites comprising beside at least one optionally hydrogenated nitrile rubber according to the present invention other ingredients customary in the rubber field.

Suitable ingredients customary in the rubber field are known to a person skilled in the art. Specific mention is made to cross-linking agents and/or curing systems, fillers and further auxiliary products for rubbers, such as reaction accelerators, vulcanization accelerators, vulcanization acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes extenders, organic acids, inhibitors, metal oxides, and activators such as triethanolamine, polyethylene glycol, hexanetriol etc.

### Cross-linking agents and/or curing systems

The present invention is not limited to a special cross-linking agent or curing system. Suitable curing systems are for example peroxide curing systems, sulfur curing systems, amine curing systems, UV curing systems, polyvalent epoxy curing systems, polyvalent isocyanate curing systems, aziridine curing systems, basic metal oxide curing systems or organometallic halide curing systems. Preferred curing systems are peroxide curing systems, sulfur curing systems, amine curing systems or UV curing systems. A particularly preferred cross-linking agent or curing system is a peroxide system.

### Peroxide curing system

The present invention is not limited to a special peroxide cross-linking agent or curing system. For example, inorganic or organic peroxides are suitable. Useful organic peroxides include dialkylperoxides, ketalperoxides, aralkylperoxides, peroxide ethers, peroxide esters such as di-tert.-butylperoxide, 2,2'-bis-(tert.-butylperoxyisopropyl)-benzene, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy-3,3,5-trimethyl-cyclohexane, benzoylperoxide, tert.-butyl-cumylperoxide and tert.-butylperbenzoate.

Usually, the amount of peroxide in the polymer composite is in the range of from 1 to 10 phr (= parts per hundred of rubber), preferably 1 to 8 phr.

Curing is usually performed at a temperature in the range of from 100 to 200 °C, preferably 130 to 180 °C. The peroxide might be applied advantageously in a polymer-bound form. Suitable systems are commercially available, such as Polydispersion T(VC) D-40 P from Rhein Chemie Rheinau GmbH, D (= polymer bound di-tert.-butylperoxy-isopropylbenzene).

### Amine curing system

As amine curing system usually a polyamine cross-linking agent is used, preferably in combination with crosslinking accelerator. The present invention is not limited to a special polyamine crosslinking agent or cross-linking accelerator.

The polyamine crosslinking agent is not restricted in particular as long as the said agent is (1) a compound having two or more amino groups or (2) a species that forms a compound having two or more amino groups during crosslinking in-situ. However, a compound wherein a plurality of hydrogens of an aliphatic hydrocarbon or aromatic hydrocarbon have been replaced by amino groups or hydrazide structures (a structure represented by "-CONHNH₂", wherein CO denotes carbonyl group) is preferred.

As examples of polyamine crosslinking agents (ii), the following shall be mentioned:
- an aliphatic polyamine, preferably hexamethylene diamine, hexamethylene diamine carbamate, tetramethylene pentamine, hexamethylene diamine-cinnamaldehyde adduct, or hexamethylene diamine-dibenzoate salt;
- an aromatic polyamine, preferably 2,2-bis (4-(4-aminophenoxy) phenyl) propane, 4,4'-methylenedianiline, m-phenylenediamine, p-phenylenediamine, or 4,4'-methylene bis (o-chloroaniline);
- compounds having at least two hydrazide structures, preferably isophthalic acid dihydrazide, adipic acid dihydrazide, or sebacic acid dihydrazide.

Among these, an aliphatic polyamine is preferred, and hexamethylene diamine carbamate is particularly preferred.

The content of the polyamine crosslinking agent in the vulcanizable polymer composition is in the range of from 0.2 to 20 parts by weight, preferably in the range of from 1 to 15 party by weight, more preferably of from 1.5 to 10 parts by weight based on 100 parts by weight of the nitrile rubber.

The cross-linking accelerator may be any cross-linking accelerator known in the art, for example a basic crosslinking accelerator, preferably being a guanidine crosslinking accelerator such as tetramethylguanidine, tetraethylguanidine, diphenylguanidine, di-o-tolylguanidine, o-tolylbiguanidine and a di-o-tolylguadinine salt of dicathecolboric acid; or aldehydeamine crosslinking accelerators such as n-butylaldehydeaniline, acetaldehydeammonnia and hexamethylenetetramine, whereby a guanidine crosslinking accelerator, especially DOTG (Di-o-tolyl guanidin), is preferred. In one embodiment of the present invention the cross-linking is at least one bi- or polycyclic aminic base. Suitable bi- or polycyclic aminic base are known to a person skilled in the art. Preferably, bi- or polycyclic aminic base is selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO), 1,5,7-triazabicyclo[4.4.0]dec-5-ene (TBD), 7-methyl-1,5,7-triazabicyclo[4.4.0]dec-5-ene (MTBD) and its derivatives.

The bi- or polycyclic aminic bases can be prepared by methods known in the art. The preferred bases mentioned in the present invention are commercially available.

In one embodiment of the present invention a bi- or polycyclic aminic base is used having a pK_{b}-value (measured in DMSO) in the range of from -2 to +12.

The content of basic cross-linking accelerators in the rubber composition is usually in the range of 0.5 to 10 parts by weight, preferably 1 to 7.5 parts by weight, more preferably 2 to 5 parts by weight, based on 100 parts by weight of the nitrile rubber.

Curing is preferably performed by heating the vulcanizable polymer composition to a temperature in the range of from about 130° to about 200°C, preferably from about 140° to about 190°C, more preferably from about 150° to about 180°C. Preferably, the heating is conducted for a period of from about 1 minutes to about 15 hours, more preferably from about 5 minutes to about 30 minutes.

It is possible and in some cases recommendable to perform a so-called post-curing at temperature in the range of from about 130° to about 200°C, preferably from about 140° to about 190°C, more preferably from about 150° to about 180°C for a period of up to 15 hours which is performed outside the die, e.g. by placing the vulcanizate, i.e. the respective form part, in a standard oven.

### UV curing system

Suitable UV curing systems are known in the art. In the UV curing system usually a photosensitizer (photopolymerization initiator) is used. Examples of photosensitizers include benzoin, benzophenone, benzoin methyl ether, benzoin ethyl ether, benzoin isopropyl ether, benzoin isobutyl ether, dibenzyl, 5-nitroacenaphthene, hexachlorocyclopentadiene, p-nitrodiphenyl, p-nitroaniline, 2,4,6-trinitroaniline, 1,2-benzanthraquinone, 3-methyl-1,3-diaza-1,9-benzanthrone. The photosensitizers can be usd singly or in combination of two or more of them.

The photosensitizer is generally used in an amount of 0.1 to 5 parts by weight, preferably 0.1 to 2 parts by weight, more preferably 0.1 to 1 parts by weight based on 100 parts by weight of the nitrile rubber.

### Sulfur curing system

Sulfur curing is usually carried out with elemental sulfur or sulfur containing vulcanizing agents known in the art. Said sulfur containing vulcanizing agents usually contain sulfur in a heat-labile form. They liberate sulfur at the curing temperature (sulfur donors).

Sulfur donors can be subdivided into those that can be substituted directly for sulfur, without drastic change of the curing characteristics, and those that are simultaneously vulcanization accelerators. Products of the first type are for example dithiodimorpholine, and caprolactamdisulfide, N,N'-dithio bis-(hexahydro-2H-azepinone),. For sulfur donors that are at the same time vulcanization accelerators, the vulcanization system has to be properly modified, known by a person skilled in the art. Examples of sulfur donors that are at the same time vulcanization accelerators are 2-morpholino-dithio-benzothiazole, dipentamethylene thiuramtetrasulfide, N-oxydiethylene dithiocarbamyl-N'-oxyoxydiethylene sulfenamide as well as tetramethyl thiuram disulfide.

Preferred sulfur containing vulcanizing agents are benzothiazol disulfide, e.g. Vulkacit® DM/C, tetramethyl thiuram monosulfide, e.g. Vulkacit® Thiuram MS/C, tetramethyl thiuram disulfide, e.g. Vulkacit® Thiuram/C and mixtures thereof..

Sulfur or sulfur donors are used as curing agent usually in an amount of 0.25 to 5 parts by weight based on 100 parts by weight of the nitrile rubber, preferably 1.5 to 2.5 parts by weight based on 100 parts by weight of the nitrile rubber.

Usually, the sulfur or sulfur containing vulcanizing agents are used together with a vulcanization accelerator. Suitable vulcanization accelerators are known in the art. Examples are mercapto accelerators, sulfenamide accelerators, thiuram accelerators, dithiocarbamate accelerators, dithiocarbamylsulfenamide accelerators, xanthate accelerators, guanidine accelerators, amine acceleratorsthiourea accelerators, dithiophosphate accelerators and sulfur donors.

The vulcanization accelerators are usually employed in an amount of 0.5 to 1 parts by weight based on 100 parts by weight of the nitrile rubber. When the accelerator dosage is increased (for example 1.5 to 2.5 parts by weight based on 100 parts by weight of the nitrile rubber), the sulfur content should preferably be lowered.

In a preferred embodiment the sulfur based vulcanization systems additionally comprise a peroxide such as zinc peroxide.

### Fillers

Useful fillers may be active or inactive fillers or a mixture of both. The filler may be, for example:
- highly dispersed silicas, prepred e.g. by the precipitation of silicate solutions or the flame hydrolysis of silicon halides, preferably with specific surface areas in the range of from 5 to 1000 m²/g, and with primary particle sizes in the range of from 10 to 400 nm; the silicas can optionally also be present as mixed oxideswith other metal oxides such as those of Al, Mg, Ca, Ba, Zn, Zr and Ti;
- synthetic silicates, such as aluminium silicates and alkaline earth metal silicates like magnesium silicate or calcium silicate, preferably with BET specific surface areas in the range of from 20 to 400 m²/g and primary particle diameters in the range of from 10 to 400 nm;
- natural silicates, such as kaolin and other naturally occurring silicates;
- glass fibers and glass fiber products (matting extrudates) or glass microspheres;
- metal oxides, such as zinc oxide, calcium oxide, magnesium oxide and aluminium oxide;
- metal carbonates, such as magnesium carbonate, calcium carbonate and zinc carbonate;
- metal hydroxides, e.g. aluminium hydroxide and magnesium hydroxide;
- carbon blacks; the carbon blacks to be preferably used in the composites according to the present invention are prepared by the lamp black, furnace black or gas black process and have preferably BET (DIN 66 131) specific surface areas in the range of from 20 to 200 m²/g, e.g. SAF, ISAF, HAF, FEF or GPF carbon blacks;
- rubber gels, especially those based on polybutadiene, butadiene/styrene copolymers, butadiene/acrylonitrile copolymers and polychloroprene;
or mixtures thereof.

Examples of suitable mineral fillers include silica, silicates, clay such as bentonite, gypsum, alumina, titanium dioxide, talc, mixtures of these, and the like. These mineral particles have hydroxyl groups on their surface, rendering them hydrophilic and oleophobic. This exacerbates the difficulty of achieving good interaction between the filler particles and the rubber. For many purposes, the mineral can be silica, for example, silica made by carbon dioxide precipitation of sodium silicate. Dried amorphous silica particles suitable for use in accordance with the present invention may have a mean agglomerate particle size in the range of from 1 to 100 microns, for example between 10 and 50 microns or, for example between 10 and 25 microns. According to the present invention less than 10 percent by volume of the agglomerate particles should be below 5 microns or over 50 microns in size. A suitable amorphous dried silica moreover usually has a BET surface area, measured in accordance with DIN (Deutsche Industrie Norm) 66131, of in the range of from 50 and 450 square meters per gram and a DBP absorption, as measured in accordance with DIN 53601, of in the range of from 150 and 400 grams per 100 grams of silica, and a drying loss, as measured according to DIN ISO 787/11, of in the range of from 0 to 10 percent by weight. Suitable silica fillers are available under the trademarks HiSil® 210, HiSil® 233 and HiSil® 243 from PPG Industries Inc. Also suitable are Vulkasil S and Vulkasil N, from Lnxess Deutschland GmbH.

Often, use of carbon black as a filler is advantageous. Usually, carbon black is present in the polymer composite in an amount of in the range of from 20 to 200 parts by weight, for example 30 to 150 parts by weight, or for example 40 to 100 parts by weight. Further, it might be advantageous to use a combination of carbon black and mineral filler in the inventive polymer composite. In this combination the ratio of mineral fillers to carbon black is usually in the range of from 0.05 to 20, or for example 0.1 to 10.

The polymer composite may advantageously further contain other natural or synthetic rubbers such as BR (polybutadiene), ABR (butadiene/acrylic acid-C₁-C₄-alkylester-copolymers), CR (polychloroprene), IR (polyisoprene), SBR (styrene/butadiene-copolymers), preferably with styrene contents in the range of 1 to 60 wt %, EPDM (ethylene/propylene/diene-copolymers), FKM (fluoropolymers or fluororubbers), and mixtures of the given polymers. Careful blending with said rubbers often reduces cost of the polymer composite without sacrificing the processability. The amount of natural and/or synthetic rubbers will depend on the process condition to be applied during manufacture of shaped articles and is readily available by few preliminary experiments.

### Further auxiliary products for rubbers

Further auxiliary products for rubbers, are for example reaction accelerators, vulcanization accelerators, vulcanization acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes extenders, organic acids, inhibitors, metal oxides, and activators such as triethanolamine, polyethylene glycol, hexanetriol etc.

The further auxiliary products for rubbers (rubber aids) are used in conventional amounts, which depend inter alia on the intended use. Conventional amounts are e.g. from 0.1 to 50 wt. %, based on rubber. For example, the composite can contain in the range of 0.1 to 20 phr of an organic fatty acid as an auxiliary product, such as a unsaturated fatty acid having one, two or more carbon double bonds in the molecule which can include 10% by weight or more of a conjugated diene acid having at least one conjugated carbon-carbon double bond in its molecule. For example, those fatty acids have in the range of from 8-22 carbon atoms, or for example 12-18. Examples include stearic acid, palmitic acid and oleic acid and their calcium-, zinc-, magnesium-, potassium- and ammonium salts. For example, the composition can contain in the range of 5 to 50 phr of an acrylate as an auxiliary product. Suitable acrylates are known from EP-A1-0 319 320, in particular p. 3, 1. 16 to 35, from U.S. Pat. No. 5,208,294, Col. 2,1. 25 to 40, and from U.S. Pat. No. 4,983,678, Col. 2, 1. 45 to 62. Reference is also made to zinc acrylate, zinc diacrylate or zinc dimethacrylate or a liquid acrylate, such as trimethylolpropanetrimethacrylate (TRIM), butanedioldimethacrylate BDMA) and ethylenglycoldimethacrylate (EDMA). It might be advantageous to use a combination of different acrylates and/or metal salts thereof. For example, to use metal acrylates in combination with a Scorch-retarder such as sterically hindered phenols (e.g. methyl-substituted aminoalkylphenols, in particular 2,6-di-tert.-butyl-4-dimethyl-aminomethylphenol).

The ingredients of the final polymer composite can be mixed together, suitably at an elevated temperature that may range from 25 °C to 200 °C. Normally the mixing time does not exceed one hour and a time in the range from 2 to 30 minutes is usually adequate. If the polymer composite is prepared without solvent or was recovered from the solution, the mixing can be suitably carried out in an internal mixer such as a Banbury mixer, or a Haake or Brabender miniature internal mixer. A two-roll mill mixer also provides a good dispersion of the additives within the elastomer. An extruder also provides good mixing, and permits shorter mixing times. It is possible to carry out the mixing in two or more stages, and the mixing can be done in different apparatus, for example one stage in an internal mixer and one stage in an extruder. However, it should be taken care that no unwanted pre-crosslinking (=scorch) occurs during the mixing stage. For compounding and vulcanization see also: Encyclopedia of Polymer Science and Engineering, Vol. 4, p. 66 et seq. (Compounding) and Vol. 17, p. 666 et seq. (Vulcanization).

Due to the low viscosity of the optionally hydrogenated nitrile rubber according to the present invention as well as of the polymer composite comprising the optionally hydrogenated nitrile rubber according to the present invention, the optionally hydrogenated nitrile rubber according to the present invention as well as of the polymer composite are ideally suited to be processed by but not limited to molding injection technology. The optionally hydrogenated nitrile rubber according to the present invention as well as the polymer composite can also be useful to transfer molding, to compression molding, to liquid injection molding. The optionally hydrogenated nitrile rubber according to the present invention or the polymer composite is usually introduced in a conventional injection molding and injected into hot (about 160-230 °C) forms where the cross-linking/vulcanization takes place depending on the polymer composite and temperature of the mold.

The inventive optionally hydrogenated nitrile rubber according to the present invention as well as the polymer composition are very well suited for the manufacture of a shaped article, such as a seal, hose, bearing pad, stator, well head seal, valve plate, cable sheathing, wheel roller, pipe seal, in place gaskets or footwear component, preferably prepared by injection molding technology, compression molding, transfer molding, liquid injection molding, pressure free curing or combinations thereof. Furthermore, the inventive polymer blend is very well suited for wire and cable production, especially via extrusion processes.

The present invention therefore further relates to a shaped article comprising at least one optionally hydrogenated nitrile rubber according to the present invention or at least one polymer composite according to the present invention.

The present invention also relates to the use of the optionally hydrogenated nitrile rubber according to the present invention or the polymer composite according to the present invention for the preparation of a shaped article.

Examples for shaped articles as well as examples for preparation processes for obtaining the shaped articles are mentioned above.

### EXAMPLES:

### A) PREPARATION EXAMPLES

| | |
|---|---|
| **Cement Concentration*** | 15% by weight |
| **Co-Olefin** | 1-Hexene |
| **Co-Olefin Concentration** | 4 phr |
| **Metathesis Catalyst** | 1,3-bis-(2,4,6-trimethylphenyl)-2-imidazolidinylidene) (tricyclohexylphosphine)-Ruthenium(phenyl methylene) dichloride (Grubb's 2^{nd} Generation catalyst (NGG)) (Materia Inc., U.S.A.) |
| **Hydrogenation Catalyst** | tris-(triphenylphosphine) rhodium chloride (Wilkinson's catalyst) (Umicore AG, Germany) |
| **Catalyst Loading** | See Tables 1, 2 and 3 |
| **Solvent** | Monochlorobenzene (MCB) |
| **Perbunan^{®} T 3429 (Control #1)** | statistical butadiene-acrylonitrile copolymer with an acrylonitrile content of 34 mol% and a Mooney-Viscosity (ML (1+4)@ 100 °C) of 29 MU. (Lanxess Deutschland GmbH, Germany) |
| **Perbunan^{®} T 3435 (Control #2)** | statistical butadiene-acrylonitrile copolymer with an acrylonitrile content of 34 mol% and a Mooney-Viscosity (ML (1+4)@ 100 °C) of 35 MU. (Lanxess Deutschland GmbH, Germany) |

| | |
|---|---|
| * "Cement Concentration" means the concentration of the nitrile rubber in the reaction mixture. | |

The progress of the reaction was monitored using GPC in accordance with DIN 55672-1.

### EXAMPLES 1-4:

75 g of Perbunan^{®} T 3429 was dissolved in 500g monochlorobenzene in a 1L vessel. Upon complete dissolution of the nitrile rubber 4phr of 1-Hexene was added to the vessel and the solution was agitated for 2 h upon which 1,3-bis-(2,4,6-trimethylphenyl)-2-imidazolidinylidene) (tricyclohexylphosphine)-Ruthenium (phenyl-methylene) dichloride was dissolved in 20mL of MCB and was added to the 1L vessel. The reaction mixture was allowed to react for a period of 12h at a temperature of 22°C while being agitated. After the set time allotment was complete, the solution submitted for GPC analysis.

**Table 1:**

| | **Metathesis** | **Mn** | **Mw** | **PDI** |
|---|---|---|---|---|
| | **Catalyst (phr)** | **(g/mol)** | **(g/mol)** | |
| **Control #1** | - | 69000 | 217500 | 3,15 |
| **Example 1** | 0,04 | 24500 | 48000 | 1,96 |
| **Example 2** | 0,06 | 19000 | 35500 | 1,84 |
| **Example 3** | 0,08 | 16000 | 29500 | 1.77 |
| **Example 4** | 0,1 | 15000 | 25500 | 1,73 |

### EXAMPLES 5-6:

700 g of Perbunan ^{®} T 3435 was dissolved in 4667g monochlorobenzene in a 10L high pressure reactor. Upon complete dissolution of the nitrile rubber, 4phr of 1-Hexene was added to the reactor and the solution was agitated for 2h at 22°C upon which time an MCB solution of 1,3-bis-(2,4,6-trimethylphenyl)-2-imidazolidinylidene) (tricyclohexylphosphine)-Ruthenium (phenyl-methylene) was added to the reactor. The solution was than allowed to agitate at 22°C for a period of 2h.

On completion of the metathesis reaction the reactor was charged with an MCB solution of tris-(triphenylphosphine) rhodium chloride (0,06phr) and the reactor pressurized with hydrogen to 85bar. The reaction mixture was allowed to react for a period of 4h at a temperature of 138°C while being agitated (600rpm) at which time a hydrogenated nitrile rubber solution was obtained with a level of hydrogenation <0,9%. Following the hydrogenation the solution was worked using a process wherein the rubber solution was heated and concentrated in a roto-vap to a concentration that could still be poured. The rubber solution was than poured onto sheets and placed in an evacuating, heated oven until the odor of MCB was no longer present.

**Table 2:**

| | | | **NBR** | | | **HNBR** | | |
|---|---|---|---|---|---|---|---|---|
| | **Metathesis** | **Solvent** | **Mn** | **Mw** | **PDI** | **Mn** | **Mw** | **PDI** |
| | **Catalyst** | **Content *** | **(g/mol)** | **(g/mol)** | | **(g/mol)** | **(g/mol)** | |
| | **(phr)** | **(ppm)** | | | | | | |
| **Control #2** | - | - | 68000 | 238000 | 3,51 | 69000 | 243000 | 3,53 |
| **Example 5** | 0,07 | 200 | 9300 | 13700 | 1,48 | 8500 | 12000 | 1,42 |
| **Example 6** | 0,01 | 1900 | 12700 | 21000 | 1,67 | 11000 | 17500 | 1,58 |

| | | | | | | | | |
|---|---|---|---|---|---|---|---|---|
| * Solvent content, refers to the amount of monochlorobenzene remaining in the isolated and dried HNBR. | | | | | | | | |

### EXAMPLE 7:

Example 7 was conducted using the same procedure as outlined above for Examples 5-6 with the exception that the nitrile rubber was Perbunan^{®} T 3429 versus Perbunan^{®} T 3435,

**Table 3:**

| | **Metathesis** | **Solvent** | **Mn** | **Mw** | **PDI** |
|---|---|---|---|---|---|
| | **Catalyst** | **Content *** | **(g/mol)** | **(g/mol)** | |
| | **(phr)** | **(ppm)** | | | |
| **Control #1** | - | - | 69000 | 217500 | 3,15 |
| **Example 7** | 0,1 | 1300 | 19000 | 34000 | 1,78 |

| | | | | | |
|---|---|---|---|---|---|
| * Solvent content, refers to the amount of monochlorobenzene remaining in the isolated and dried HNBR. | | | | | |

### B) COMPOUNDING EXAMPLES

Based on the hydrogenated nitrile rubber according to Example 7 (Mₙ 19000g/mol; M_{w} 34000 g/mol the following polymer composites mentioned in table 4 have been prepared by mixing the components mentioned below at on an open mill.

The components of the vulcanizable polymer composition were mixed on an open mill by conventional mixing. The polymer composition was then vulcanized at 180°C for a period of 20 minutes.

**Table 4: Polymer composites**

| | **Sample 1** | **Sample 2** |
|---|---|---|
| hydrogenated nitrile rubber ¹⁾ | 100 | 100 |
| CORAX N 550/30²⁾ | | 35 |
| VULKASIL A1³⁾ | | 10 |
| DIPLAST TM 8-10/ST⁴⁾ | | 8 |
| LUVOMAXX CDPA⁵⁾ | | 1,1 |
| VULKANOX ZMB2/C5⁶⁾ | | 0,4 |
| TAIC 70 (KETTLITZ-TAIC 70)⁷⁾ | | 2 |
| PERKADOX 14-40 B-PD⁸⁾ | 14 | 14 |

1) hydrogenated nitrile rubber (produced according to example 7)
2) Carbon Black (Evonic-Degussa AG)
3) Mineral Filler (Lanxess Deutschland)
4) Plasticiser (Lonza SpA)
5) Anti-Aging Agent (Schill und Seilacher, Hamburg)
6) Anti-Aging Agent (Lanxess Deutschland)
7) Co-Agent (Kettlitz)
8) Peroxide (Akzo Nobel)

The properties of the polymer composites according to table 4 are summerized in Tables 5, 6 and 7.

**Table 5: Properties of the polymer composites**

| **MDR 180°C** | **Sample 1** | **Sample 2** |
|---|---|---|
| S' min [dNm] | 0.02 | 0.03 |
| S' max [dNm] | 5.23 | 10.23 |
| S' end [dNm] | 5.09 | 9.99 |
| Delta S' [dNm] | 5.21 | 10.2 |
| TS 2 [s] | 142 | 125 |
| t50 [s] | 165 | 193 |
| t90 [s] | 317 | 383 |
| t95 [s] | 382 | 464 |

**Table 6: Properties of the polymer composites**

| **Compound Viscosity** | | **Sample 1** | **Sample 2** |
|---|---|---|---|
| **Temperature** | **Shear Rate [1/s]** | **Viscosity [Pa*s]** | **Viscosity [Pa*s]** |
| 50 °C | 1 | 1860 | 7150 |
| 75 °C | 1 | 370 | 2200 |
| 100 °C | 1 | 129 | 937 |
| | | | |
| 50 °C | 10 | 1620 | 4300 |
| 75 °C | 10 | 336 | 1360 |
| 100 °C | 10 | 109 | 440 |

**Table 7: Properties of the polymer composites**

| **Tensile test & hardness (RT)** | **Sample 1** | **Sample 2** |
|---|---|---|
| M10 [MPa] | 0.1 | 0.3 |
| M25 [MPa] | 0.2 | 0.6 |
| M50 [MPa] | 0.3 | 1 |
| M100 [MPa] | 0.4 | 2.7 |
| M300 [MPa] | 1 | -- |
| EB [%] | 376 | 192 |
| TS [MPa] | 2.1 | 6.8 |
| H [ShA] | 22 | 51 |

The vulcanization behavior (MDR) was determined in accordance with ASTM D 5289 (180°C, 1°, 1.7 Hz, 60 min). Characteristic data like S' min [dNm], S' max [dNm], S' end [dNm], Delta S' [dNm], t50 [s], t90 [s] and t95 [s] have been determined, wherein
- S' min [dNm]: is the vulcameter display in the minimum of the cross-linking isotherme
- S' max [dNm]: is the maximum of the vulcameter display
- S' end [dNm]: is the vulcameter display at the end of the vulcanization
- Delta S' [dNm]: is the difference between the vulcameter displays S' min and S' max
- t50 [s]: is the time when 50% conversion are reached
- t90 [s]: is the time when 90% conversion are reached
- t95 [s]: is the time when 95% conversion are reached.

The **tensile stress at rupture ("tensile strength")** of the vulcanizates as well as the stress values "M xxx" with "xxx" representing the percentage of elongation based on the length of the original test specimen was determined in accordance with ASTM D412-80.

**Hardness properties** were determined using a Type A Shore durometer in accordance with ASTM-D2240-81.

The determination of the **Mooney viscosity (ML 1+4 @100°C)** is carried out in accordance with ASTM standard D 1646.

The determination of the viscosity dependant on shear rate and temperature is carried out with a Rheometer MCR 301 (Anton Paar, Germany) with a Plate/Plate geometry and a plate-diameter of 25 mm.

## Claims

1. An optionally hydrogenated nitrile rubber having a weight average molecular weight M_{w} of 50,000 g/mol or less and a polydispersity index of less than 2.0.

2. A process for preparing an optionally hydrogenated nitrile rubber according to claim 1, comprising subjecting a nitrile rubber to a molecular weight degradation via a metathesis reaction in the presence of a homogeneous catalyst and optionally a co-olefin, as well as in the presence of a solvent, wherein the metathesis is carried out in the presence of at least one transition metal complex catalyst, wherein the optionally hydrogenated nitrile rubber is isolated from the solvent through a process where the rubber is contacted with a mechanical degassing device.

3. The process according to Claim 2, wherein the at least one transition metal complex catalyst is selected from the group consisting of
(i) a compound of the general formula (I), 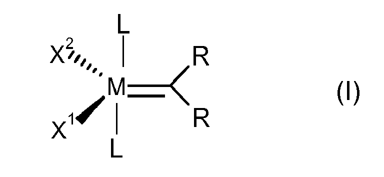 where
M is osmium or ruthenium,
the radicals R are identical or different and are each an alkyl, preferably C₁-C₃₀-alkyl, cycloalkyl, preferably C₃-C₂₀-cycloalkyl, alkenyl, preferably C₂-C₂₀-alkenyl, alkynyl, preferably C₂-C₂₀-alkynyl, aryl, preferably C₆-C₂₄-aryl, carboxylate, preferably C₁-C₂₀-carboxylate, alkoxy, preferably C₁-C₂₀-alkoxy, alkenyloxy, preferably C₂-C₂₀-alkenyloxy, alkynyloxy, preferably C₂-C₂₀-alkynyloxy, aryloxy, preferably C₆-C₂₄-aryloxy, alkoxycarbonyl, preferably C₂-C₂₀-alkoxycarbonyl, alkylamino, preferably C₁-C₃₀-alkylamino, alkylthio, preferably C₁-C₃₀-alkylthio, arylthio, preferably C₆-C₂₄-arylthio, alkylsulphonyl, preferably C₁-C₂₀- alkylsulphonyl, or alkylsulphinyl, preferably C₁-C₂₀-alkylsulphinyl radical, each of which may optionally be substituted by one or more alkyl, halogen, alkoxy, aryl or heteroaryl radicals,
X¹ and X² are identical or different and are two ligands, preferably anionic ligands, and
L represents identical or different ligands, preferably uncharged electron donors;
(ii) a compound having the structure (III) or (IV), where Cy is in each case cyclohexyl; 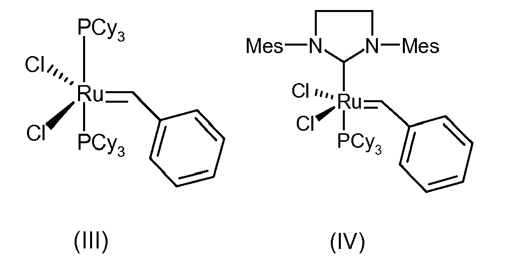
(iii) a compound of the general formula (V), 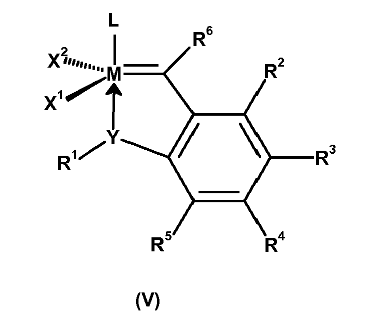 where
M is ruthenium or osmium,
Y is oxygen (O), sulphur (S), an N-R¹ radical or a P-R¹ radical,
X¹ and X² are identical or different ligands,
R¹ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphynyl radical, each of which may optionally be substituted by one or more alkyl, halogen, alkoxy, aryl or heteroaryl radicals,
R², R³, R⁴ and R⁵ are identical or different and are each hydrogen, organic or inorganic radicals,
R⁶ is hydrogen or an alkyl, alkenyl, alkynyl or aryl radical and
L represents identical or different ligands, preferably uncharged electron donors;
(iv) a compound of the general formula (VI), 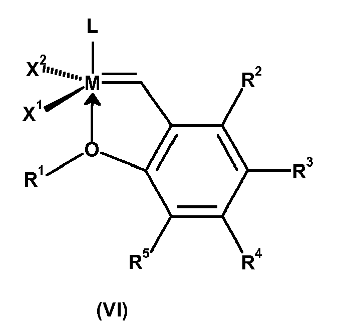 where
M, L, X¹, X², R¹, R², R³, R⁴ and R⁵ have the meanings given for the general formula (V) mentioned under (iii);
(v) a compound of the following structures (VIII), (IX), (X), (XI), (XII), (XIII), (XIV) or (XV), where Mes is in each case a 2,4,6-trimethylphenyl radical, 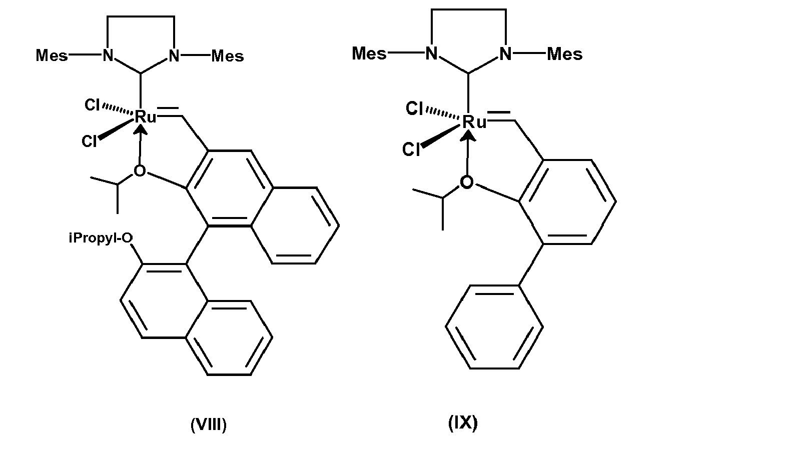 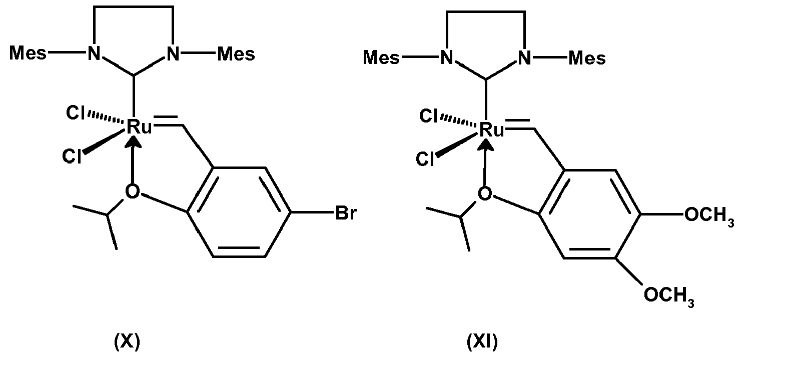 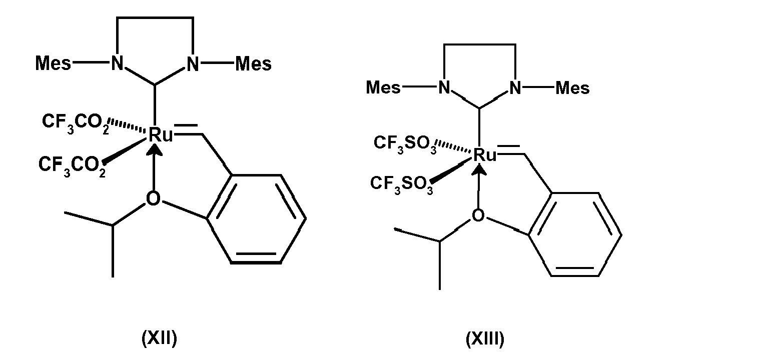 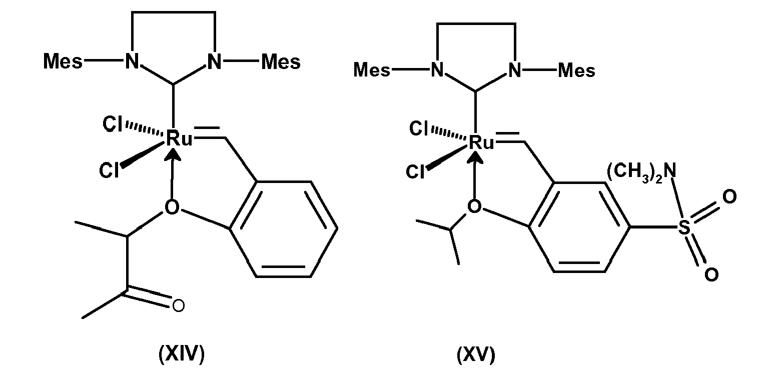
(vi) a compound of the general formula (XVI) 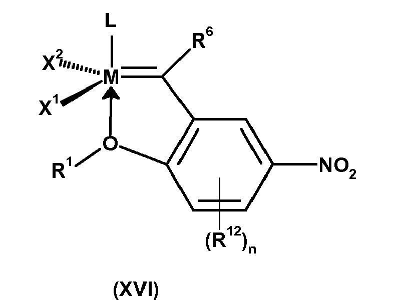 where
M, L, X¹, X², R¹ and R⁶ have the meanings given for the general formula (V) in Claim 8,
the radicals R¹² are identical or different and have the meanings given for the radicals R², R³, R⁴ and R⁵ in the general formula (V) in Claim 8, with the exception of hydrogen, and
n is 0, 1, 2 or 3;
(vii) a compound of the general formula (XIX), 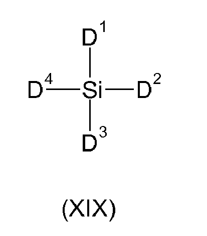 where D¹, D², D³ and D⁴ each have a structure of the general formula (XX) below which is bound via the methylene group to the silicon of the formula (XIX), 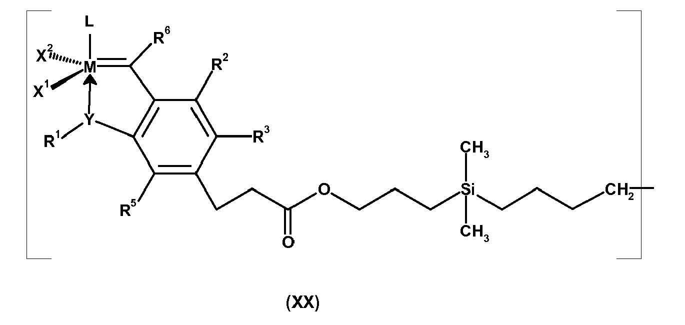 where
M, L, X¹, X², R¹, R², R³, R⁵ and R⁶ have the meanings given for the general formula (V) in (iii);
(viii) a compound of the general formula (XXV) 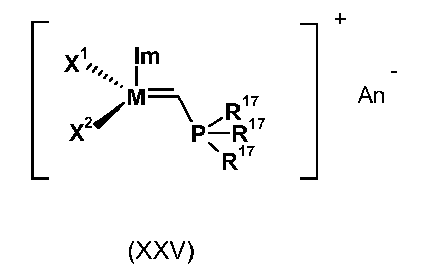 where
M is ruthenium or osmium,
X¹ and X² are identical or different and are anionic ligands,
the radicals R¹⁷ are identical or different and are organic radicals,
Im is a substituted or unsubstituted imidazolidine radical and
An is an anion;
(ix) a compound of the general formula (XXVI) 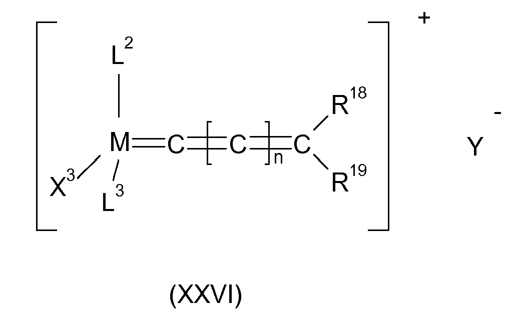 where
M is ruthenium or osmium,
R¹⁸ and R¹⁹ are each, independently of one another, hydrogen, C₁-C₂₀-alkyl, C₂-C₂₀- alkenyl, C₂-C₂₀-alkynyl, C₆-C₂₄-aryl, C₁-C₂₀-carboxylate, C₁-C₂₀-alkoxy, C₂- C₂₀₋alkenyloxy, C₂-C₂₀-alkynyloxy, C₆-C₂₄-aryloxy, C₂-C₂₀-alkoxycarbonyl, C₁-C₂₀-alkylthio, C₁-C₂₀-alkylsulphonyl or C₁-C₂₀-alkylsulphinyl,
X³ is an anionic ligand,
L² is an uncharged π-bonded ligand, whether or not it is monocyclic or polycyclic,
L³ is a ligand from the group of phosphines, sulphonated phosphines, fluorinated phosphines, functionalized phosphines having up to three aminoalkyl, ammonioalkyl, alkoxyalkyl, alkoxycarbonylalkyl, hydrocarbonylalkyl, hydroxyalkyl or ketoalkyl groups, phosphites, phosphinites, phosphonites, phosphine amines, arsines, stibines, ethers, amines, amides, imines, sulphoxides, thioethers and pyridines,
Y⁻ is a noncoordinating anion and
n is 0, 1, 2, 3, 4 or 5;
(x) a compound of the general formula (XXVII) 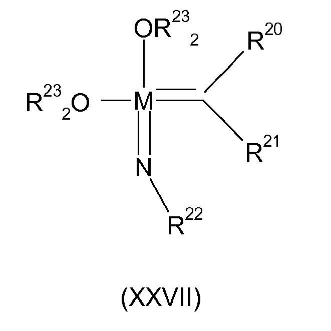 where
M² is molybdenum or tungsten,
R²⁰ and R²¹ are identical or different and are each hydrogen, C₁-C₂₀-alkyl, C₂-C₂₀- alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxy- carbonyl, C₁-C₂₀-alkylthio, C₁-C₂₀-alkylsulphonyl or C₁-C₂₀-alkylsulphinyl,
R²² and R²³ are identical or different and are each a substituted or halogen-substituted C₁-C₂₀-alkyl, C₆-C₂₄-aryl, C₆-C₃₀-aralkyl radical or a silicone-containing analogue thereof;
(xi) a compound of the general formula (XXVIII) 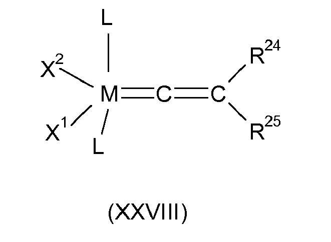 where
M is ruthenium or osmium,
X¹ and X² are identical or different and are anionic ligands which can assume all the meanings of X¹ and X² in the general formulae (A) and (B),
L are identical or different ligands which can assume all the meanings of L in the general formulae (I) and (V),
R²⁴ and R²⁵ are identical or different and are each hydrogen or substituted or unsubstituted alkyl;
and
(xii) a compound of the general formula (XXI), XXII) or (XXIII), 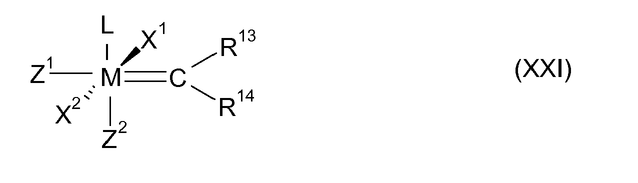 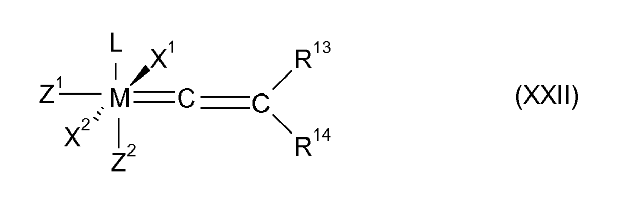 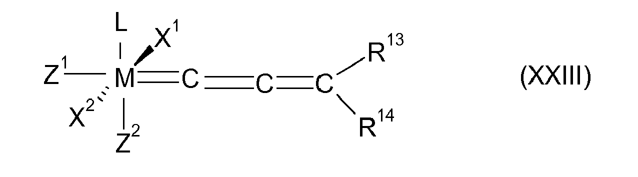 where
M is ruthenium or osmium,
X¹ and X² are identical or different ligands, preferably anionic ligands,
Z¹ and Z² are identical or different and neutral electron donor ligands,
R¹³ and R¹⁴ are identical or different and hydrogen or a substituent selected from the group consisting of alkyl, cycloalkyl, alkenyl, alkynyl, aryl, carboxylate, alkoxy, alkenyloxy, alkynyloxy, aryloxy, alkoxycarbonyl, alkylamino, dialkylamino, alkylthio, arylthio, alkylsulphonyl and alkylsulphinyl radical, each of which may optionally be substituted by one or more substituents, preferably alkyl, halogen, alkoxy, aryl or heteroaryl radicals, and
L is a ligand.

4. The process according to claim 3, wherein in the compound of the general formula (VI)
M is ruthenium,
X¹ and X² are both halogen, in particular, both chlorine,
R¹ is a straight-chain or branched C₁-C₁₂-alkyl radical, preferably an isopropyl radical,
R², R³, R⁴, R⁵ have the meanings given for the general formula (V), preferably R², R³, R⁴,
R⁵ are all hydrogen, and
L has the general and preferred meanings given for the general formula (V), preferably, L is a substituted or unsubstituted imidazolidine radical of the formula (IIa) or (IIb), 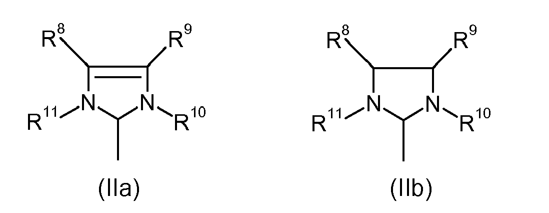
where
R⁸, R⁹, R¹⁰, R¹¹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄- aryl, C₁-C₂₀-carboxylate, C₁-C₂₀-alkoxy, C₂-C₂₀-alkenyloxy, C₂-C₂₀- alkynyloxy, C₆-C₂₄-aryloxy, C₂-C₂₀-alkoxycarbonyl, C₁-C₂₀-alkylthio, C₆- C₂₄-arylthio, C₁-C₂₀-alkylsulphonyl, C₁-C₂₀-alkylsulphonate, C₆-C₂₄- arylsulphonate or C₁-C₂₀-alkylsulphinyl.

5. The process according to claim 4, wherein the compound of the formula (VI) has the
following formula (VII), where Mes is in each case a 2,4,6-trimethylphenyl radical;

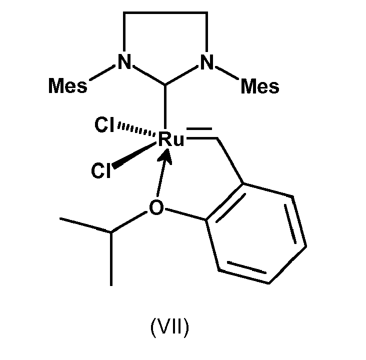

6. The process according to claim 3, wherein in the compound of the general formula (XVI)
M is ruthenium,
X¹ and X² are both halogen, in particular both chlorine,
R¹ is a straight-chain or branched C₁-C₁₂-alkyl radical, preferably an isopropyl radical,
R¹² has the meanings given for the general formula (V),
n is 0, 1, 2 or 3, preferably 0,
R⁶ is hydrogen and
L has the meanings given for the general formula (V), preferably, L is a substituted or unsubstituted imidazolidine radical of the formula (IIa) or (IIb), 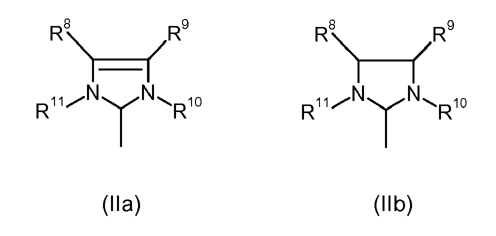
where
R⁸, R⁹, R¹⁰, R¹¹ are identical or different and are each hydrogen, straight-chain or branched, cyclic or acyclic C₁-C₃₀-alkyl, C₂-C₂₀-alkenyl, C₂-C₂₀-alkynyl, C₆-C₂₄-aryl, C₁-C₂₀- carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₂₀-alkylsulphonyl, C₁-C₂₀-alkylsulphonate, C₆-C₂₄-arylsulphonate or C₁-C₂₀-alkylsulphinyl.

7. The process according to claim 6, wherein the compound of the general formula (XVI) has
the structure (XVII)

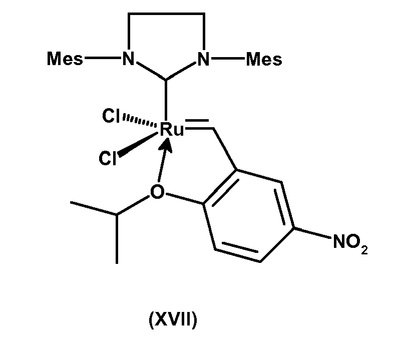

8. The process according to claim 6, wherein the compound of the general formula (XVI) has
the structure (XVIII), where Mes is in each case a 2,4,6-trimethylphenyl radical

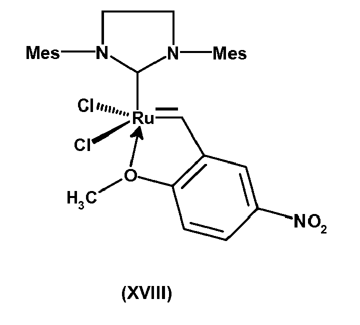

9. The process according to claim 3, wherein in the compound of the general formula (XXI)
M is ruthenium,
X¹ and X² are both halogen, in particular, both chlorine,
Z¹ and Z² are identical or different and represent five- or six-membered monocyclic groups containing 1 to 4, preferably 1 to 3, most preferably 1 or 2 heteroatoms, or bicyclic or polycyclic structures composed of 2, 3, 4 or 5 such five- or six-membered monocyclic groups wherein all aforementioned groups are optionally substituted by one or more alkyl, preferably C₁-C₁₀- alkyl, cycloalkyl, preferably C₃-C₈-cycloalkyl, alkoxy, preferably C₁-C₁₀- alkoxy, halogen, preferably chlorine or bromine, aryl, preferably C₆-C₂₄- aryl, or heteroaryl, preferably C₅-C₂₃ heteroaryl radicals, or Z¹ and Z² together represent a bidentate ligand, thereby forming a cyclic structure,
R¹³ and R¹⁴ are identical or different and are each C₁-C₃₀-alkyl C₃-C₂₀-cycloalkyl, C₂- C₂₀-alkenyl, C₂-C₂₀-alkynyl, C₆-C₂₄-aryl, C₁-C₂₀-carboxylate, C₁-C₂₀- alkoxy, C₂-C₂₀-alkenyloxy, C₂-C₂₀-alkynyloxy, C₆-C₂₄-aryloxy, C₂-C₂₀- alkoxycarbonyl, C₁-C₃₀-alkylamino, C₁-C₃₀-alkylthio, C₆-C₂₄-arylthio, C₁- C₂₀-alkylsulphonyl, C₁-C₂₀-alkylsulphinyl, each of which may optionally be substituted by one or more alkyl, halogen, alkoxy, aryl or heteroaryl radicals, and
L is a substituted or unsubstituted imidazolidine radical of the formula (IIa) or (IIb), 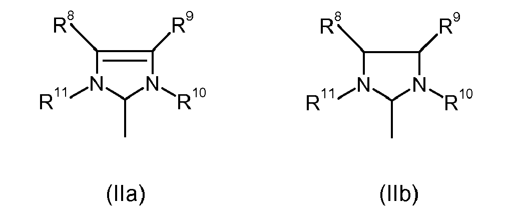
where
R⁸, R⁹, R¹⁰, R¹¹ are identical or different and are each hydrogen, straight-chain or branched, cyclic or acyclic C₁-C₃₀-alkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₂₀-alkylsulphonyl, C₁-C₂₀-alkylsulphonate, C₆-C₂₄-arylsulphonate or C₁-C₂₀-alkylsulphinyl.

10. The process according to claim 9, wherein the compound of the general formula (XXI) has the formula (XXIV) 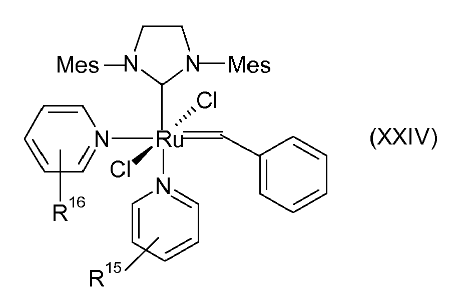 where
R¹⁵, R¹⁶ are identical or different and represent halogen, straight-chain or branched C₁-C₂₀ alkyl, C₁-C₂₀ heteroalkyl, C₁-C₁₀ haloalkyl, C₁-C₁₀ alkoxy, C₆-C₂₄ aryl, preferably phenyl, formyl, nitro, nitrogen heterocycles, preferably pyridine, piperidine and pyrazine, carboxy, alkylcarbonyl, halocarbonyl, carbamoyl, thiocarbomoyl, carbamido, thioformyl, amino, trialkylsilyl und trialkoxysilyl.

11. The process according to claim 10, wherein the compound of the general formula (XXVI) has the formula (XXIVa) or (XXIVb), wherein R¹⁵ and R¹⁶ have the same meaning as given for structural formula (XXIV)

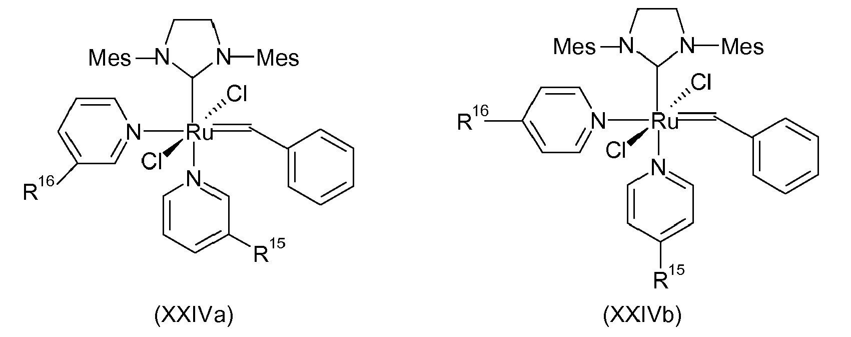

12. The process according to any one of claims 2 to 11, wherein nitrile rubber is a copolymer of acrylonitrile and 1,3-butadiene.

13. The process according to any one of claims 3 to 14 in which the mechanical degassing device is a single-, twin- or multi-screw extruder, preferably a twin screw extruder.

14. A polymer composite comprising at least one optionally hydrogenated nitrile rubber as claimed in claim 1, at least one cross-linking agent and/or curing system, optionally at least one filler and optionally further auxiliary products for rubbers, preferably reaction accelerators, vulcanization accelerators, vulcanization acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes extenders, organic acids, inhibitors, metal oxides, and activators.

15. A shaped article comprising an optionally hydrogenated nitrile rubber according to claim 1 or a composite according to claim 14.
